**Europäisches Patentamt**

**European Patent Office**

**Office européen des brevets**

(19)

(11) Numéro de publication : **0 478 601 B1**

## (12) FASCICULE DE BREVET EUROPEEN

(45) Date de publication du fascicule du brevet :
**01.09.93 Bulletin 93/35**

(51) Int. Cl.⁵ : **G01B 7/10**, G01B 7/12

(21) Numéro de dépôt : **90909030.0**

(22) Date de dépôt : **21.06.90**

(86) Numéro de dépôt international :
**PCT/BE90/00032**

(87) Numéro de publication internationale :
**WO 90/15965 27.12.90 Gazette 90/29**

(54) **PROCEDE ET DISPOSITIF DE MESURE DE LA SECTION OU DU DIAMETRE DE PRODUITS CYLINDRIQUES LONGS EN MATERIAUX CONDUCTEURS.**

(30) Priorité : **22.06.89 BE 8900689**

(43) Date de publication de la demande :
**08.04.92 Bulletin 92/15**

(45) Mention de la délivrance du brevet :
**01.09.93 Bulletin 93/35**

(84) Etats contractants désignés :
**CH DE FR GB LI LU NL**

(56) Documents cités :
**DE-A- 2 020 749**
**DE-A- 2 164 601**
**DE-A- 2 435 338**
**FR-A- 1 505 716**
**FR-A- 2 531 527**
**US-A- 4 083 002**

(73) Titulaire : **UNIVERSITE CATHOLIQUE DE LOUVAIN**
**Place de l'Université, 1**
**B-1348 Louvain la Neuve (BE)**

(72) Inventeur : **DE HALLEUX, Benoit**
**82, avenue Chevalier-Jehan**
**B-1300 Wavre (BE)**
Inventeur : **DUMONT, Pierre**
**6, rue V.-Lagneau**
**B-5600 Tamines (BE)**
Inventeur : **VAN DE WYNGAERT, Robert**
**29, avenue du Gueret**
**B-1350 Limal (BE)**
Inventeur : **DE LIMBURG STIRUM, Bruno**
**Park 4**
**B-3053 Huldenberg (BE)**

(74) Mandataire : **Van Malderen, Michel et al**
**p.a. Office van Malderen avenue J.S. Bach 22/43**
**B-1080 Bruxelles (BE)**

EP 0 478 601 B1

## Description

### Objet de l'invention

La présente invention concerne un procédé de mesure sans contact de section ou de diamètre de produits cylindriques longs ou de barreaux conducteurs comme des tubes ou des profilés cylindriques. Le procédé s'applique à tous les matériaux conducteurs ferromagnétiques comme l'acier doux, mi-dur ou dur et non ferromagnétiques comme les alliages d'aluminium ou le cuivre. Le procédé s'applique tant à des produits sans mouvement qu'à des produits en mouvement.

### Etat de la technique

Actuellement, il existe des procédés de mesure de diamètre exploitant diverses techniques fort différentes Par exemple, on peut effectuer des mesures de diamètre de fils grâce à un faisceau laser de haute directivité avec une excellente précision (de l'ordre du micron). Cependant, le dispositif associé au procédé utilisant le laser est fort coûteux et il est difficile d'effectuer la mesure en continu lors du défilement du fil.

Il existe également une technique de mesure de diamètre de tubes exploitant les mesures de temps de transit de rayons acoustiques dans des jets d'eau. La réalisation de la mesure nécessite également l'arrêt du défilement du tube pour obtenir une mesure de précision.

De plus, les résultats obtenus par ces deux méthodes sont particulièrement sensibles aux variations de paramètres perturbateurs tels la température ambiante, les vibrations ...

Le brevet DE 2020 749 décrit un dispositif de mesure sans contact de la surface de section d'un corps de forme quelconque et ce dans différentes conditions de température. Le principe est basé sur la diminution d'inductance d'une bobine de mesure lors de l'introduction de l'objet conducteur. Le mesure se fait en courant alternatif.

La formule exploitée est la suivante

$$\frac{L - L_v}{L_v} = \beta \frac{S_b}{S_s}$$

$\beta$ est une constante qui dépend de la forme de la bobine. La valeur de $\beta$ préconisée pour les bobines à section circulaire à savoir 1/3, montre qu'il s'agit de bobines courtes.

Le brevet DE 2435 338 décrit un procédé pour déterminer la section de fils, le procédé étant indépendant de la vitesse de défilement du fil, de son mouvement perpendiculaire à l'axe du solénoïde et de l'écart à un diamètre de consigne.

Le principe est une mesure différentielle d'inductance (via une fréquence de résonance) de deux solénoïdes concentriques plongés dans le champ magnétique alternatif homogène d'une bobine de Helmoltz combinée avec une bobine courte de correction de champ.

Le champ électromagnétique créé est alternatif.

Le brevet DE 216 46 01 décrit un procédé et un appareil de mesure pour déterminer le diamètre de fil, éventuellement isolés, et ce sans contact, sans interruption du processus et sans tenir compte de l'isolant. La mesure se fait à l'aide d'un courant alternatif d'une fréquence suffisamment élevée pour que l'effet de la conductivité $\sigma$ disparaisse. Le principe de mesure du brevet suppose une induction moyenne indentique dans l'entrefer et dans la section de pénétration.

Le brevet stipule la nécessité d'un guidage correct du fil dans la bobine de mesure de telle façon que le fil garde la même position relative à l'intérieur de la bobine pendant tout le processus de fabrication.

Le brevet US 408 3002 décrit une méthode et un appareil pour mesurer la surface de la section droite et le poids par unité de longueur d'un produit long conducteur par effet de déplacement du champ magnétique. Le dispositif comprend outre un solénoïde d'excitation coaxial, encerclant le produit long et alimenté par un courant alternatif bifréquence (100 et 10 MHz) un ou plusieurs solénoïdes récepteurs coaxiaux avec le solénoïde d'excitation et intérieur à celui-ci. Le brevet précise que le produit long conducteur doit se déplacer au centre du solénoïde d'excitation et du ou des solénoïdes de réception.

Le brevet FR 1505 716 décrit un procédé pour le contrôle des dimensions de la section d'une barre métallique en mouvement.

Il s'agit en fait de la mesure indirecte en courant alternatif de l'inductance d'un solénoïde encerclant la barre métallique en exploitant l'amortissement d'un circuit oscillant. Le brevet stipule un guidage axial.

Les procédés décrits dans les brevets DE 2020 749, DE 2435 338, DE 216 4601, US 408 3002 et FR 1505 716 n'éliminent pas suffisamment les facteurs perturbateurs rendant le procédé inexploitable pour une mesure industrielle de précision, à savoir entre autres, l'effet du décentrage, l'effet du mouvement vertical dans le solénoïde, et l'écart par rapport à un diamètre de consigne.

Tous ces procédés et dispositifs ne permettent pas d'atteindre une précision suffisance nécessaire à une application industrielle de précision. D'autre part, la reproductibilité des résultats est assez mauvaise.

Le brevet français n° 2531 527 décrit un procédé pour la détermination de l'épaisseur du revêtement en matériau conducteur sur un produit long en matériau ferromagnétique. Ce brevet ne concerne donc pas la mesure de section des barreaux conducteurs.

**Buts de l'invention**

La présente invention vise à fournir un procédé de mesure qui peut s'effectuer en continu et sans contact lors du défilement du barreau.

L'invention vise tout particulièrement à améliorer la précision des mesures à effectuer et à obtenir une reproductibilité suffisante pour des applications industrielles de haute précision.

Un autre but de la présente invention est de fournir un procédé de mesure subissant peu ou pas du tout l'influence de facteurs extérieurs comme la température, la vitesse du défilement, les vibrations de la table de mesure, les mouvements relatifs alternatifs entre le capteur et le produit à mesurer ...

Le dispositif selon la présente invention doit être simple et donc d'un prix de revient peu élevé.

D'autres buts et avantages apparaîtront dans la description qui suit.

**Eléments caractéristiques de l'invention**

L'invention concerne un procédé selon la revendication 1, et des dispositifs selon les revendications 8-10.

La présente invention consiste à utiliser un solénoïde long constitué de spires jointives ou non et de préférence à une couche encerclant le produit cylindrique long ou le barreau conducteur dont on désire connaître la section.

Dans un mode d'exécution préférentiel de l'invention, on mesure à l'aide d'un courant ondulé (somme d'un courant alternatif et d'un courant continu) que l'on envoie dans le solénoïde encerclant le barreau conducteur, d'une part la résistance $R_v$ liée à la composante continue du courant et l'impédance $Z = R + jL\omega$ du solénoïde vis à vis de la composante alternative du courant, R et **L** étant respectivement la résistance et l'inductance déterminées en négligeant les effects capacitifs.

La mesure peut s'effectuer aussi bien lors du défilement du barreau conducteur dans le solénoïde que lorsque celui-ci est au repos dans le solénoïde.

On peut déterminer la section $S_b$ du barreau conducteur par la formule suivante :

$$S_b = S_s - \frac{L S_s}{\alpha \mu_o N^2}\left(L - \frac{u}{v}\frac{R - R_v}{\omega}\right)$$

si l'on connaît la section $S_s$ du solénoïde, sa longueur L et le nombre de spires N du solénoïde.

$\mu_o$ est la perméabilité du vide.

$\omega$ est la pulsation $2\pi f$ du courant ondulé.

$\alpha$ est un facteur correcteur qui vaut l'unité lorsque le solénoïde est très long.

u et v sont deux paramètres fonctions de la valeur de l'expression $a\sqrt{\mu\sigma\omega}$ dont le rapport vaut l'unité pourvu que l'expression $a\sqrt{\mu\sigma\omega}$ soit supérieure à 100.

$\mu$ est la perméabilité magnétique

$\sigma$ est la conductivité

a est le rayon du barreau.

Suivant un autre mode d'exécution, on place le solénoide encerclant le produit conducteur dans un montage en pont dont il occupe une des branches. On alimente ce pont en courant ondulé et l'on équilibre le pont pour la valeur nominale de diamètre du produit conducteur. Lorsque le diamètre du produit varie, on observe une variation de la résistance $R_v$ au courant continu, une variation de la résistance R et de l'inductance **L** qui affecte la partie alternative du courant soit respectivement $\Delta R_v$, $\Delta R$ et $\Delta$**L**.

Si le solénoïde est très long et si la fréquence est assez élevée, on a

3

$$\Delta S_b = - \frac{L \, S_s}{\mu_o \, N^2} \left( \Delta L - \frac{u}{v} \frac{\Delta R}{\omega} \right)$$

Suivant un autre mode d'exécution encore différent, on mesure d'abord la résistance $R_v$ lorsque le solénoïde est vide à une température donnée T et l'inductance $L_v$ lorsque le solénoïde est vide.

Ensuite on effectue une seconde mesure, lorsque le solénoïde encercle le barreau conducteur, des résistances R et inductance L. Cette dernière mesure doit être réalisée à la même température T sinon il faut corriger la résistance R pour tenir compte de l'effet de la température.

Cette seconde mesure peut s'effectuer aussi bien lors du défilement du barreau conducteur dans le solénoïde que lorsque celui-ci est au repos dans le solénoïde.

On peut déterminer la section $S_b$ du barreau conducteur par la formule suivante :

$$S_b = S_s \left( 1 - \frac{\alpha_v \, L}{\alpha \, L_v} + \frac{u}{v} \frac{\alpha_v}{\alpha} \frac{R - R_v}{L_v \, \omega} \right)$$

si l'on connaît la section $S_s$ ou le diamètre 2a du long solénoïde et la pulsation $\omega = 2\pi f$ du courant alternatif parcourant le solénoïde.

Cette formule est une autre présentation de la formule correspondante présentée précédemment, le coefficient de correction $\alpha_v$ étant défini par la relation suivante :

$$\frac{L_v}{\alpha_v} = \frac{\mu_o \, N^2}{L}$$

Suivant un autre mode d'exécution encore différent, on peut travailler par comparaison en réalisant un montage en pont ou une des branches du pont est occupée par le solénoïde de mesure, une autre branche du pont étant à impédance réglable. La tension qui apparaît aux extrémités de la diagonale autres que les extrémités d'alimentation permet une mesure de la variation de section du produit encerclé par le solénoïde. On peut exploiter soit l'amplitude soit la phase soit l'amplitude et la phase.

Suivant un autre mode d'exécution encore différent, on peut travailler par comparaison en comparant l'impédance Z du solénoïde encerclant le produit à mesurer à l'impédance Z' obtenue préalablement avec le même solénoïde encerclant un barreau de référence.

Suivant un mode d'exécution encore différent, on peut utiliser la fréquence de résonance du solénoïde pour déterminer la section ou le diamètre du produit encerclé.

Suivant un mode d'exécution encore différent, on peut utiliser la fréquence de résonance d'un circuit dans lequel est inséré le solénoïde pour déterminer la section ou le diamètre du produit encerclé.

## Brève description des figures

La figure 1 représente la variation de deux paramètres u et v en fonction de ka où k vaut $\sqrt{\mu\sigma\omega}$

La figure 2 représente la courbe B-H d'un matériau ferromagnétique.

La figure 3 représente la variation de la perméabilité d'un matériau ferromagnétique en fonction du champ magnétique H.

La figure 4 représente pour le solénoïde à spires non jointives décrit plus loin, la variation du module de l'impédance Z avec la fréquence du courant de mesure lorsque le solénoïde est vide.

La figure 5 représente pour le solénoïde à spires non jointives décrit plus loin, la variation de la phase $\theta$ de l'impédance Z avec la fréquence du courant de mesure lorsque le solénoïde est vide.

La figure 6 représente pour le solénoïde à spires non jointives décrit plus loin, la variation du module de l'impédance Z avec la fréquence du courant de mesure lorsque le solénoïde encercle un barreau conducteur.

La figure 7 représente pour le solénoïde à spires non jointives décrit plus loin, la variation de la phase $\theta$ de l'impédance Z avec la fréquence du courant de mesure lorsque le solénoïde encercle un barreau conducteur.

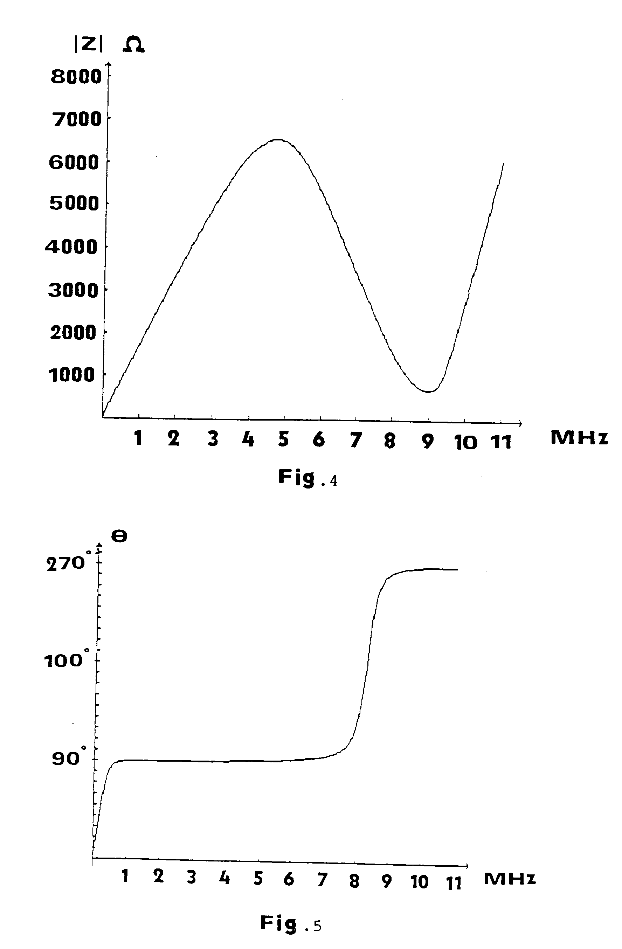

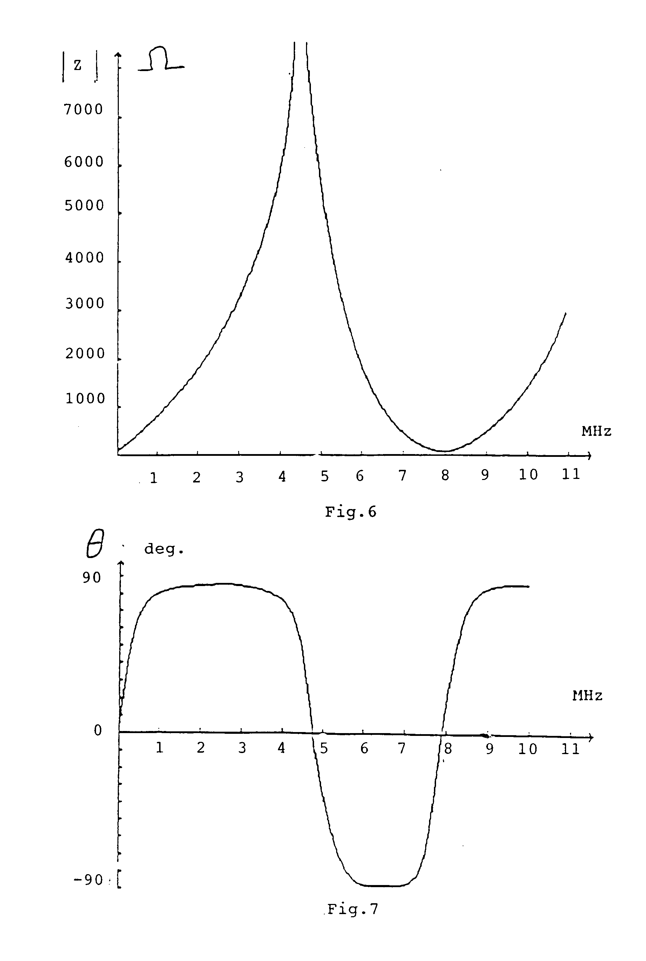

Les figures 4 à 7 représentent des résultats bruts de mesure obtenus sur un analyseur d'impédance Hewlett Packard Model 4192A LF.

## Divers modes d'exécution préférentielle de l'invention

C'est un fait connu que l'approche d'un objet en matériau conducteur fait varier l'impédance d'un solénoïde. Il s'agit de l'effet à distance sur le solénoïde, des courants de Foucault créés dans l'objet conducteur par le voisinage du solénoïde alimenté par un courant alternatif pour la mesure de l'impédance.

Si pour une première approche on néglige la capacité électrique du solénoïde, l'impédance complexe Z se compose d'une résistance R et d'une inductance **L**.

L'impédance Z permet de relier en amplitude et en phase, la tension U aux bornes du solénoïde et le courant I qui le parcourt.

On peut montrer dans le cas ou la capacité C du solénoïde peut être négligée, que l'inductance **L** et la résistance R sont données par les formules suivantes :

$$L = \frac{N\Phi_o \cos \varphi}{I_o} \quad (1)$$

$$R = R_v - \frac{N\omega \, \Phi_o \sin \varphi}{I_o} \quad (2)$$

où N est le nombre de spires du solénoïde, $\varphi$ est la phase entre le courant I et le flux moyen $\Phi$ dans les sections du solénoïde, $I_o$ et $\Phi_o$ sont les amplitudes respectives du courant I et du flux $\Phi$, $R_v$ est la résistance ohmique du solénoïde éloigné de tout objet conducteur et $\omega$ est la pulsation du courant I alternatif, c'est-à-dire $2\pi f$, f étant la fréquence. L'inductance **L** et la résistance R obtenues en négligeant la capacité électrique C du solénoïde, sont dites inductance apparente et résistance apparente. Lorsque la conjonction des effets de la capacité C et de la fréquence f permet de négliger l'effet capacitif, les inductances et résistances apparentes sont égales aux inductances et résistances réelles.

On est en droit de penser qu'il doit y avoir moyen de créer une relation entre la variation de l'impédance Z qui apparaît au voisinage d'un objet conducteur et la caractéristique géométrique de l'objet qui nous intéresse.

Les produits dont on veut mesurer la section sont longs, cylindriques et en matériau conducteur.

Par produits cylindriques, on entend les produits dont la surface extérieure est cylindrique, c'est-à-dire que cette surface est engendrée par une droite (génératrice) qui se déplace parallèlement à une direction fixe en s'appuyant sur une courbe plane fixe (directrice) dont le plan coupe la direction donnée.

On peut parler d'un cylindre plein ou partiellement évidé à section circulaire, elliptique, carrée ou autre, plein ou partiellement évidé. A titre d'exemple et sans volonté de limitation, on peut citer le rond de laminage, le rail de chemin de fer et le profilé laminé ou extrudé.

En employant un solénoïde court que l'on utilise dans la majorité des équipements électriques et dans lequel on introduit des produits longs conducteurs cylindriques de sections différentes et si on le fait de la manière la plus semblable par exemple en faisant coïncider les axes respectifs du solénoïde et du produit conducteur, on observe que l'impédance Z du solénoïde qui se détermine à partir des amplitudes et phases respectives de la tension U alternative d'alimentation du solénoïde et du courant I débité par l'alimentation, varie en fonction de la section du produit ; cependant, l'impédance Z varie également en fonction de la forme de la courbe directrice du cylindre, de la nature du matériau conducteur constituant le cylindre, du parallélisme ou non des axes du solénoïde et du cylindre conducteur, du centrage dans le solénoïde si les axes sont parallèles, de la vitesse de défilement du produit cylindrique, de la température du produit cylindrique conducteur, etc ...

L'effet attendu à savoir la variation d'impédance Z avec la variation de section du produit long cylindrique conducteur est atteint mais cet effet est inexploitable à cause des facteurs perturbateurs dont certains ont été cités plus haut, qui masquent l'effet utile. En analysant les facteurs perturbateurs de la mesure, il apparaît que l'on peut avantageusement utiliser un solénoïde long pour la mesure de section ou de diamètre au lieu des solénoïdes courts qui sont employés en contrôle industriel par courants de Foucault. Un solénoïde est long lorsque sa longueur vaut un nombre de fois élevé son diamètre. Si la fréquence est suffisamment élevée pour avoir un skin-effect marqué, si le solénoïde encercle un barreau cylindrique conducteur, on pourra avantageusement considérer comme un solénoïde long, un solénoïde dont la longueur vaut un nombre de fois élevé la dimension moyenne de l'entrefer.

En effet, lorsqu'une nappe de courant cylindrique de très grande longueur éloignée de tout objet en matériau conducteur est parcourue par un courant continu ou variable, d'une part l'induction magnétique B est uniforme dans l'espace intérieur à la nappe de courant, sa direction est celle de l'axe de la nappe et son sens est donné par la règle du tire-bouchon droitier et d'autre part l'induction magnétique B est nulle en tout point extérieur à la nappe de courant.

Ces propriétés remarquables ne sont exactement réalisées que pour une nappe cylindrique de longueur infinie. Cependant lorsqu'un solénoïde cylindrique de longueur finie est réalisé avec des spires jointives et que le diamètre du fil constitutif du solénoïde est beaucoup plus petit que le diamètre du solénoïde, ce dernier peut avec une bonne approximation, être assimilé à une nappe de courant cylindrique infinie pourvu que le rapport longueur sur diamètre soit suffisamment élevé ou même, avantageusement pour l'entrefer d'un solénoïde encerclant un produit long cylindrique conducteur pourvu que le rapport longueur du solénoïde sur la largeur moyenne de l'entrefer soit suffisamment élevé et ce pour une fréquence d'alimentation suffisamment élevée.

Si le solénoïde est long et que de plus l'entrefer entre la surface du solénoïde et le produit cylindrique conducteur à l'intérieur, est beaucoup plus petit que le rayon du solénoïde, on conçoit qu'il est difficile de fort désaxer (c'est-à-dire positionner le produit cylindrique avec l'axe non parallèle à l'axe du solénoïde) le produit cylindrique conducteur. En tout état de cause, le désaxage et le décentrage (c'est-à-dire positionner le produit cylindrique avec l'axe parallèle mais non confondu avec l'axe du solénoïde) si le rapport largeur moyenne d'entrefer sur la longueur du solénoïde long, est suffisamment faible, ne modifient pas l'induction magnétique dans l'entrefer sauf aux extrémités du solénoïde, car les courants de Foucault engendrés dans le produit cylindrique, se présentent sous la forme de longues nappes cylindriques de courant qui de ce fait, n'affectent l'induction magnétique qu'à l'intérieur du barreau conducteur et pas dans le volume d'entrefer. Ainsi pour un solénoïde assimilable à une nappe de courant cylindrique infinie, il n'y a pas d'effet sur l'impédance Z du décentrage du produit dans le solénoïde.

De plus, la vitesse de défilement du produit, constante ou variable, n'a également pas d'influence sur l'impédance Z d'un tel solénoïde. En effet, la force contre électromotrice de Lenz-Faraday ne varie pas au cours du défilement parce que la variation temporelle du flux $\Phi$ dans le solénoïde soit $d\Phi/dt$ ne varie pas avec le vitesse de défilement du produit si la nappe de courant cylindrique est infiniment longue.

Quant à la translation verticale alternative du produit cylindrique conducteur non ferromagnétique, elle ne change pas non plus le flux dans les différentes sections du solénoïde et de ce fait n'exerce pas non plus d'influence sur l'impédance Z du solénoïde. Bien entendu, cette propriété disparaît dans le cas d'un solénoïde de longueur finie encerclant un barreau aimanté dans le cas ou le flux moyen $\Phi$ dans les section du solénoïde dépend de la position verticale du barreau.

Dans ce cas, la translation alternative verticale du barreau peut produire une variation de la force contre-électromotrice de Lenz-Faraday.

En pratique, le solénoïde n'est pas infiniment long, il y aura un faible effet du mouvement de translation perpendiculaire à l'axe du solénoïde, du produit non-ferromagnétique, principalement dû au fait que les lignes d'induction ne sont plus axiales aux extrémités du solénoïde et que la distribution de l'induction B varie dans les sections de la barre proches des extrémités du solénoïde lors des mouvements de translation perpendiculaires à l'axe et que de ce fait, une variation de la force contre-électromotrice de Lenz-Faraday peut se produire. L'effet sera cependant d'habitude faible et ce d'autant plus que le solénoïde sera long et que la vitesse de translation sera faible.

Dans le cas d'un solénoïde encerclant un barreau, le flux $\Phi$ dans chaque section du solénoïde et la somme du flux $\Phi_c$ dans l'entrefer et du flux $\Phi_b$ dans le barreau. Si le solénoïde est alimenté par un courant alternatif I de pulsation $\omega$ ou $2\pi f$, le flux $\Phi_c$ dans l'entrefer est alternatif de même pulsation $\omega$ et si le solénoïde est assimilable à une nappe de courant cylindrique infinie, le flux $\Phi_c$ dans l'entrefer est en phase avec le courant I.

Le flux $\Phi_b$ dans le barreau est également alternatif, de même pulsation $\omega$ que le courant I mais présente vis à vis de celui-ci un déphasage $\gamma$.

On peut donc écrire

$$\Phi_c = \Phi_{co}\, e^{j\omega t} \quad (3)$$
$$\Phi_b = \Phi_{bo}\, e^{j(\omega t + \gamma)} \quad (4)$$

$\Phi_{co}$ et $\Phi_{bo}$ étant respectivement les amplitudes des flux dans l'entrefer et dans le barreau.

Si l'on néglige la capacité électrique C du solénoïde, l'inductance **L** et la résistance R du solénoïde sont données par les relations (5) et (6) déduites des relations (1) et (2).

$$\mathbf{L} = \frac{N}{I_o}(\Phi_{co} + \Phi_{bo}\cos\gamma) \quad (5)$$

$$R = R_v - \frac{N\omega}{I_o}\Phi_{bo}\sin\gamma \quad (6)$$

Lorsque la fréquence est suffisamment élevée et à cause du skin-effect, l'amplitude $\Phi_{bo}$ du flux dans le barreau est beaucoup plus petite que l'amplitude $\Phi_{co}$ du flux dans l'entrefer, de sorte que l'on peut écrire l'égalité (7) avec une erreur systématique par défaut qui décroît lorsque la fréquence augmente,

$$\mathbf{L} = \frac{N\Phi_{co}}{I_o} \quad (7)$$

Or, comme la section $S_c$ d'entrefer est égale à la section $S_s$ du solénoïde moins la section $S_b$ du barreau

$$S_c = S_s - S_b \quad (8)$$

et que l'induction est uniforme dans l'entrefer du solénoïde et vaut $\mu_o NI/L$ s'il s'agit d'un très long solénoïde, N étant le nombre de spires, I étant le courant dans le fil constitutif du solénoïde et $\mu_o$ est la perméabilité du vide soit $4\pi 10^{-7}$ H.m$^{-1}$. L'inductance **L** du solénoïde vaut alors, si $B_{co}$ représente l'amplitude de l'induction $B_c$ dans l'entrefer

$$L = \frac{N}{I_o} B_{co} S_c \quad (9)$$

On en déduit

$$L = \frac{\mu_o N^2}{L}(S_s - S_b) \quad (10)$$

A fréquence suffisamment élevée, l'inductance du solénoïde nous permet de déterminer la section $S_b$ du produit cylindrique, $\mu_o$, N, L et $S_s$ étant connus.

L'inductance **L** du barreau pour une fréquence suffisamment élevée ne dépend pas de la nature du produit cylindrique conducteur, ni de sa température pas plus que de celle régnant dans l'entrefer et dans l'atmosphère extérieure. Elle ne dépend pas non plus de la vitesse de défilement du produit si celui-ci est non aimanté ou uniformément aimanté avec un vecteur aimantation parralèle à l'axe du solénoïde, car la vitesse de défilement du produit ne fait pas varier le flux $\Phi$ dans le solénoïde, lorsque celui-ci est assimilable à une nappe cylindrique de courant de longueur infinie.

Cependant, les solénoïdes utilisés ne sont infiniment longs. Il faut alors apporter une correction à la formule (10).

On doit écrire

$$L = \alpha \frac{\mu_o N^2}{L}(S_s - S_b) \quad (11)$$

où $\alpha$ est un paramètre correcteur dont la valeur peut être approximée par la relation suivante :

$$\alpha = [1 - (\frac{s-a}{L})^2]^{\frac{1}{2}} - \frac{s-a}{L} \quad (12)$$

où s représente le rayon de la nappe cylindrique de courant et a le rayon du barreau cylindrique encerclé dans le cas ou le solénoïde et le barreau ont des sections droites circulaires. Dans les autres cas, le coefficient correcteur $\alpha$ doit être déterminé en adaptant au cas envisagé le raisonnement suivant qui a permis de proposer la formule de correction (12). Lorsque le solénoïde est vide (a = 0), la formule (12) revient à supposer que la composante axiale de l'induction magnétique B est uniforme dans chaque section droite du solénoïde c'est-à-dire qu'elle a la même valeur en chaque point d'une section droite mais que cette valeur peut varier d'une section droite à l'autre. Lorsque le solénoïde est vide, le facteur de correction sera noté $\alpha_v$. Lorsque le solénoïde n'est pas vide (a $\neq$ 0), la formule (12) revêt un caractère empirique. Elle est basée sur l'hypothèse que les propriétés d'un long solénoïde se rapproche d'autant plus de celle d'une nappe cylindrique de longueur infinie que le coefficient de remplissage $\eta = S_b/S_s$ est élevé et que la dimension de l'entrefer est faible vis à vis de la longueur L du solénoïde.

La formule (12) suppose bien entendu que la longueur L est plus grande que l'entrefer qui vaut s-a dans le cas de sections circulaires de solénoïde et de barreau.

L'application de la formule (11) à un solénoïde de N spires pour une longueur L, d'une part rempli d'un cylindre conducteur de section $S_b$ et d'autre part vide, permet d'écrire pour les inductances respectives **L** et $L_v$ les relations suivantes :

$$L = \frac{\alpha \mu_o N^2}{L}(S_s - S_b) \quad (13)$$

$$L_v = \frac{\alpha_v \mu_o N^2}{L} S_s \quad (14)$$

On en déduit

$$S_b = S_s \left(1 - \frac{\alpha_v L}{\alpha L_v}\right) \quad (15)$$

Or $L_v/\alpha_v$ est l'inductance du solénoïde qui se comporte comme une nappe de courant cylindrique infinie. Nous noterons cette inductance $Lv\infty$

$$L_{v\infty} = \frac{L_v}{\alpha_v} \quad (16)$$

La relation (15) s'écrit alors

$$S_b = S_s \left( 1 - \frac{L}{\alpha\, L_{v\infty}} \right) \qquad\qquad (17)$$

avec

$$L_{v\infty} = \frac{\mu_o\, N^2}{L}\, S_s$$

La formule (17) donne déjà d'excellents résultats si la fréquence est suffisamment élevée. Les sections $S_b$ déterminées par cette formule le sont par défaut. Pour les produits cylindriques non ferromagnétiques, il s'agit de la section résiduelle lorsqu'on a retiré une peau de l'ordre de grandeur de la profondeur p de pénétration que l'on peut calculer par la formule classique

$$p = \frac{1}{\sqrt{\pi\, f\, \mu\, \sigma}} \qquad (18)$$

où $\mu$ et la perméabilité du milieu matériel

$\sigma$ est la conductivité

f est la fréquence du courant d'alimentation du solénoïde.

Cependant, lorsque le solénoïde est long sans être très long, l'imprécision sur le facteur de correction $\alpha$ peut masquer le sens de l'erreur systématique de mesure.

Soit à titre d'exemple non limitatif, les résultats suivants obtenus avec un solénoïde d'une couche de 1000 spires jointives réalisées avec un fil de 0,15 mm, de 173 mm de longueur et d'un rayon valant 15,8963 mm.

L'inductance $L_v$ du solénoïde vide valant 5,258 x $10^{-3}$ H à 100 kHz, le calcul montre que $L_{v\infty}$ vaut 5,76535 x $10^{-3}$ H. Par conséquent, le coefficient $\alpha_v$ vaut 0,912.

On introduit dans le solénoïde des barreaux cylindriques à section circulaire en alliage d'aluminium de dénomination Al Mg Si 0,5 - 3206 (norme DIN 1712 - 1725) de diamètre nominal 27, 25, 20 et 15 mm.

Les résultats obtenus avec la formule (17) sont présentés aux tableaux suivants :

| Fréquence kHz 100 | Barreaux cylindriques à section circulaire de longueur 500 mm Matériau : Al Mg Si 0,5 - 3206 | | |
|---|---|---|---|
| Diamètre nominal mm | L mH | $\alpha$ | Diamètre calculé par (17) mm |
| 27 | 1,650 | 0,986 | 26,8 |
| 25 | 2,174 | 0,980 | 24,9 |
| 20 | 3,324 | 0,965 | 20,2 |
| 15 | 4,195 | 0,950 | 15,4 |

| Fréquence kHz 100 | Barreaux cylindriques à section circulaire longueur : 500 mm Matériau : Al Mg Si 0,5 - 3206 Diamètre nominal : 25 mm | | | | |
|---|---|---|---|---|---|
| Identification de l'échantillon | L mH | Diamètre mesuré au micromètre | $\alpha$ | Diamètre calculé par la formule 17 - mm | écart mm |
| A1 | 2,27359 | 24,69 | 0,97929 | 24,572 | - 0,12 |
| A2 | 2,27200 | 24,75 | 0,97929 | 24,578 | - 0,17 |
| A3 | 2,27361 | 24,69 | 0,97929 | 24,573 | - 0,12 |
| A4 | 2,27359 | 24,68 | 0,97929 | 24,573 | - 0,11 |
| A5 | 2,27198 | 24,70 | 0,97929 | 24,579 | - 0,12 |
| A6 | 2,27359 | 24,69 | 0,97929 | 24,573 | - 0,12 |
| A7 | 2,27517 | 24,71 | 0,97929 | 24,567 | - 0,14 |
| A8 | 2,27354 | 24,69 | 0,97929 | 24,572 | - 0,12 |
| A9 | 2,27198 | 24,71 | 0,97929 | 24,579 | - 0,13 |
| A10 | 2,27356 | 24,70 | 0,97929 | 24,573 | - 0,13 |
| A11 | 2,27356 | 24,71 | 0,97929 | 24,573 | - 0,12 |
| B1 | 2,16954 | 25,04 | 0,98054 | 24,991 | - 0,05 |
| B2 | 2,16956 | 25,13 | 0,98054 | 24,991 | - 0,14 |
| B3 | 2,16637 | 25,13 | 0,98054 | 25,003 | - 0,10 |
| B4 | 2,16637 | 25,14 | 0,98054 | 25,003 | - 0,11 |
| B5 | 2,17112 | 25,14 | 0,98054 | 24,986 | - 0,15 |
| B6 | 2,16954 | 25,12 | 0,98054 | 24,991 | - 0,13 |

A 100 kHz, la profondeur p conventionnelle de pénétration vaut 0,215 mm, dans le cas de l'aluminium ($\sigma$ = 33 x 10⁶ ($\Omega$m)⁻¹).

On voit donc que dans notre exemple l'erreur systématique de mesure par défaut est de l'ordre de grandeur de la moitié de la profondeur de pénétration conventionnelle. Cependant, dans cet exemple, nous avons une imprécision sur s que nous avons mesuré à partir du milieu de la couche de courant dont l'épaisseur est de 0,15 mm. On est sans doute du côté de la sécurité en disant que l'erreur systématique par défaut est de l'ordre de grandeur de la moitié de la profondeur conventionnelle de pénétration dans le cas des matériaux non ferromagnétiques.

Il est raisonnable de penser que dans le cas des matériaux ferromagnétiques l'erreur de mesure par défaut est de l'ordre de grandeur de $\mu_r$ fois la profondeur conventionnelle de pénétration, $\mu_r$ étant la perméabilité relative du matériau car l'induction moyenne dans la profondeur de pénétration sera environ $\mu_r$ fois plus élevée que dans l'entrefer.

$$\Delta s = \frac{\mu_r}{2\sqrt{\pi\,\mu_o\,\mu_r\,\sigma\,f}} = \frac{\sqrt{\mu_r}}{2\sqrt{\pi\,\mu_o\,\sigma\,f}} \quad (19)$$

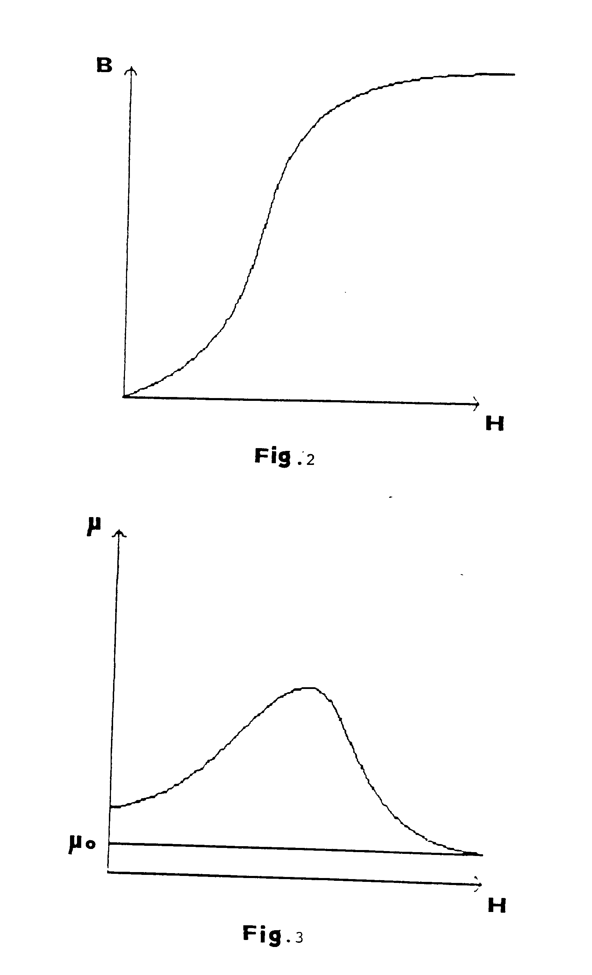

Le problème qui se pose pour les ferromagnétiques est que la perméabilité $\mu_r$ dépend du champ magnétisant H qui dans le cas d'un long solénoïde vaut N/L I (fig. 3).

On a donc intérêt à utiliser la relation (17) avec le plus faible courant I possible pour la mesure car alors la perméabilité relative $\mu_r$ aura une valeur plus faible.

Calculons ce que vaut l'erreur $\Delta s$ dans le cas de l'acier doux à une fréquence de 100 kHz. La conductivité $\sigma$ de l'acier doux vaut dans le cas considéré 6,427 10⁶ ($\Omega$m)⁻¹.

Si l'on suppose que l'inductance **L** est mesurée avec un champ magnétisant de l'ordre de 10 A/m, la perméabilité relative $\mu_r$ est de l'ordre de 73,6 (valeur mesurée).

La formule (19) nous permet alors de calculer l'ordre de grandeur de $\Delta s$

$$\Delta s = 5,39 \text{ mm}$$

Pour vérifier le caractère réaliste de l'estimation de l'erreur par défaut $\Delta s$, nous avons réalisé une mesure avec un solénoïde formé d'une couche à spires non jointives de 330 mm de long, d'un diamètre intérieur de 32,1 mm, de 328 spires réalisées avec du fil de 0,15 mm de diamètre.

L'inductance théorique $L_{v\infty}$ de ce solénoïde vaut $3,315458 \times 10^{-4}$ H. L'inductance mesurée à 100 kHz lorsque le solénoïde encercle un barreau cylindrique à section circulaire d'acier doux d'un diamètre de 25,01 mm, est de 226,9 µH. La formule (12) donne pour $\alpha$ la valeur 0,98934. Le calcul du diamètre 2b par la formule (17) donne pour résultat 17,82 mm au lieu de 25,01 mm.

L'erreur par défaut expérimentale est donc de 7,19 mm. Elle est donc de l'ordre de grandeur qui a été calculé plus haut, tout en étant un peu plus élevée.

Pour que la formule (17) soit applicable dans le cas des matériaux ferromagnétiques, il faudrait réaliser la mesure à une fréquence beaucoup plus élevée, ce qui n'est pas réalisable par la procédure que nous avons établie à cause des résonances qui apparaissent qui ne permettent plus d'utiliser la formule (17).

En effet, comme le solénoïde est formé de spires voisines en une ou plusieurs couches, il existe des capacités entre spires et même entre spires et barreau qui font que le système se comporte comme un circuit oscillant.

Il devient alors très difficile d'exploiter l'inductance **L** ou la résistance R du solénoïde pour la mesure de section $S_b$. On peut bien entendu augmenter la fréquence de résonance en utilisant un solénoïde à une couche avec des spires non jointives.

Une telle constitution de solénoïde diminue le nombre N de spires sur une longueur L donnée. Par voie de conséquence, la sensibilité de la mesure diminue.

De plus, au fur et à mesure que l'on augmente l'interdistance entre les spires consécutives du solénoïde, on s'écarte du cas de la nappe de courant cylindrique uniforme et l'induction magnétique dans l'entrefer ne peut plus être considérée comme uniforme, en tout point de l'entrefer. Une bobine à spires non jointives donne quand même de bons résultats si le coefficient de remplissage n'est pas trop proche de l'unité.

La fréquence qu'il est possible d'utiliser, tout en gardant une exploitation facile des résultats est donc limitée. Il serait donc intéressant pour l'application de pouvoir utiliser les relations (5) et (6) sans en négliger de termes et en corrigeant ces relations par les facteurs adéquats pour tenir compte de la longueur finie du solénoïde.

Dans le cas d'une nappe cylindrique infinie de courant de section circulaire encerclant un barreau cylindrique en matériau conducteur de section circulaire, on peut montrer en traitant le problème par les équations de Maxwell que les expressions de l'inductance **L** et de la résistance R du solénoïde sont données par les relations suivantes :

$$\frac{R - R_v}{\omega\, L_v} = \frac{\alpha}{\alpha_v}\, 2\, v\, \mu_r \frac{\eta}{ka} \quad (20)$$

$$\frac{L}{L_v} = \frac{\alpha}{\alpha_v}\left(1 - \eta + 2u\, \mu_r\, \frac{\eta}{ka}\right) \quad (21)$$

où $\eta$ représente le coefficient de remplissage, soit

$$\eta = \frac{S_b}{S_s} \quad (22)$$

et k est un paramètre défini par la relation suivante :

$$k = \sqrt{\mu_o\, \mu_r\, \sigma\, \omega} \quad (23)$$

$\omega$ étant la pulsation soit $2\pi f$.

Quant à u et v, ce sont deux paramètres dont les valeurs sont fonctions de ka et dont l'expression est déduite du traitement du problème par les équations de Maxwell.

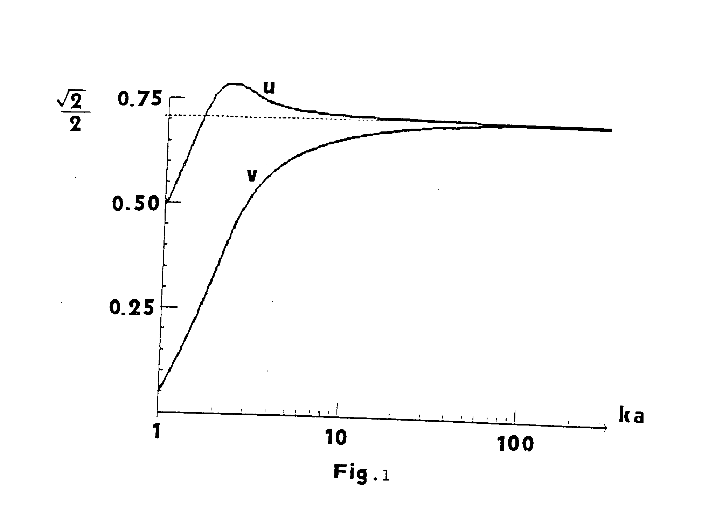

L'évolution des valeurs des paramètres u et v en fonction de la valeur du paramètre ka est illustrée sur la figure 1. Les valeurs respectives de ka, u, v et u/v sont données dans le tableau.

| ka | u | v | u/v |
|----|----|----|------|
| 0 | 0 | 0 | ind. |
| 1 | 0,4899 | 0,0608 | 8,058 |
| 2 | 0,7738 | 0,3449 | 2,244 |
| 3 | 0,7485 | 0,5399 | 1,3864 |
| 4 | 0,7141 | 0,5842 | 1,2224 |
| 5 | 0,7101 | 0,6040 | 1,17566 |
| 6 | 0,7101 | 0,6211 | 1,14329 |
| 7 | 0,7094 | 0,6339 | 1,11910 |
| 8 | 0,7088 | 0,6459 | 1,09738 |
| 9 | 0,7084 | 0,6511 | 1,08800 |
| 10 | 0,7081 | 0,6562 | 1,079091 |
| 20 | 0,7073 | 0,6619 | 1,06859 |
| 50 | 0,7071 | 0,6971 | 1,01434 |
| 100 | 0,7071 | 0,7021 | 1,007121 |
| ∞ | 0,7071 | 0,7071 | 1 |

Nous observons que u et v tendent rapidement vers le même valeur, à savoir :

$$u = v = \frac{\sqrt{2}}{2}$$

lorsque le paramètre ka augmente.

En éliminant $\mu_r\ \eta/ka$ entre les relations (20) et (21), on obtient la relation suivante :

$$S_b = S_s \left[ 1 - \frac{\alpha_v\ L}{\alpha\ L_v} + \frac{u}{v}\ \frac{\alpha_v\ (R - R_v)}{\alpha\ \omega\ L_v} \right] \qquad (24)$$

On en tire dans le cas de produits longs cylindriques à section circulaire

$$D_b = 2D_s\ \sqrt{1 - \frac{L}{\alpha\ L_{v\infty}} + \frac{u}{v}\ \frac{R - R_v}{\alpha\ L_{v\infty}\ \omega}} \qquad (25)$$

où $D_s$ est le diamètre du solénoïde vide et $D_b$ est le diamètre moyen du barreau conducteur cylindrique à section circulaire et $L_{v\infty}$ est l'inductance du solénoïde de longueur infinie.

La formule (24) est l'équivalent de la formule (17) corrigée par un terme additionnel pour tenir compte du flux dans le barreau cylindrique.

La formule (25) ne comporte aucune approximation à part le facteur correcteur $\alpha$ lié à la longueur finie du solénoïde qui n'a qu'une précision relative car la formule permettant de calculer $\alpha$ est empirique.

L'interprétation physique de la relation (24) est en l'écrivant comme suit :

$$\frac{S_s - S_b}{S_s} = \frac{\alpha_v}{\alpha}\ \frac{L}{L_v} - \frac{\alpha_v}{\alpha}\ \frac{u}{v}\ \frac{(R - R_v)/\omega}{L_v}$$

Le rapport entre la section d'entrefer $S_b - S_s$ et la section du solénoïde $S_s$ est égal au rapport de la partie du flux dans le solénoïde en phase avec le courant I sur le flux dans le solénoïde vide, diminué du rapport de la partie du flux dans le barreau en phase avec le courant I sur le flux dans le solénoïde vide.

Le sens physique du rapport u/v est le suivant :

C'est le rapport entre la partie du flux dans le barreau qui est en phase avec le courant sur la partie du flux dans le barreau qui est en quadrature avec le courant.

En outre, la formule (2) nous montre $\frac{(R - R_v)}{\omega}$ est proportionnel à l'amplitude de la partie du flux qui est en quadrature avec le courant I.

Soit $R - R_v = y_2$ proportionnel à la puisance dissipée par effet Joule dans le barreau et $\omega L = x_1 + y_1$, le

11

terme $x_1$ étant proportionnel au flux traversant l'entrefer (flux en phase avec le courant) et le terme $y_1$ étant proportionnel à la partie du flux traversant le barreau en phase avec le courant.

Avec ces définitions de $x_1$, $y_1$ et $y_2$, le rapport $\dfrac{u}{v}$ vaut $\dfrac{y_1}{y_2}$.

Lorsque u égale à v, à suffisamment haute fréquence, $y_1$ égale $y_2$ et le flux dans le barreau a un déphasage de - 45° sur le courant.

En examinant la relation (25), on observe que la fréquence f et la nature du matériau ne joue plus de rôle dès que la valeur du paramètre ka est assez élevée pour que le rapport u/v soit pratiquement égal à l'unité.

On observe sur la figure 1 que cette condition est réalisée lorsque la valeur de ka dépasse la valeur de 100.

Il ne faut pas oublier que dans la relation (25) le rapport u/v multiplie un terme correctif qui est petit par rapport aux autres termes.

La tableau suivant donne les valeurs de ka pour différentes fréquences dans le cas de l'aluminium et du cuivre lorsque le rayon a vaut 25 mm.

| Fréquence | ka<br>a = 25 mm | |
|-----------|-----------|--------|
| [Hz] | Aluminium | Cuivre |
| 10k | 20,18 | 26,05 |
| 20k | 28,54 | 36,84 |
| 40k | 40,36 | 52,10 |
| 100k | 90,25 | 116,50 |
| 200k | 127,63 | 164,75 |
| 1M | 201,8 | 260,5 |

On voit qu'aux fréquences de l'ordre de 200 kHz à 400 kHz, on peut poser

$$u = v = \frac{\sqrt{2}}{2}$$

et appliquer la formule

$$D_b = 2D_s\left(1 - \frac{L}{\alpha\,L_{v\infty}} + \frac{R - R_v}{\alpha\,\omega\,L_{v\infty}}\right)^{1/2} \quad (26)$$

Dans le cas des matériaux ferromagnétiques et en particulier des aciers, la valeur du paramètre ka dépend du champ magnétisant H (A/m) qui est en fait quasi égal au courant NI/L par unité de longueur dans le long solénoïde. Il serait exactement égal à NI/L pour une nappe de courant de longueur infinie.

La perméabilité magnétique $\mu$ est donnée par la pente de la droite passant par l'origine en un point de la courbe B-H. Pour un matériau homogène, isotrope et sans hystérésis magnétique, nous pouvons écrire (figure 2).

$\mu$ = B/H pour une valeur du champ magnétisant H

La courbe B-H de première magnétisation montre que la perméabilité varie en fonction du champ magnétisant H. On observe que la perméabilité croît tout d'abord rapidement en fonction du champ magnétisant, passe par un point maximum, et ensuite décroît (figure 3). Elle tend vers la perméabilité du vide lorsque le champ magnétisant augmente infiniment. En ce qui concerne les matériaux ferromagnétiques, nous avons donc montré qu'il n'était pas facile de quantifier les valeurs du paramètre ka parce que la valeur de $\mu_r$ sera entre autres donc fonction du courant I dans le solénoïde pendant la mesure de l'impédance Z. En tout état de cause, les valeurs de ka calculées dans des conditions expérimentales équivalentes seront plus élevées que pour des matériaux non-ferromagnétiques car l'augmentation de la perméabilité relative $\mu_r$ est relativement plus importante que la diminution de conductivité électrique $\sigma$.

L'hypothèse $u = v = \dfrac{\sqrt{2}}{2}$ sera donc vérifiée à partir de fréquences plus basses.

L'application de la formule (20) en supposant $\alpha = 1$ et $v = \dfrac{\sqrt{2}}{2}$, permet de se fixer l'ordre de grandeur de la perméabilité relative $\mu_r$ et du paramètre ka.

A titre d'exemple non limitatif, on a introduit un tube en acier doux dont la conductivité $\sigma$ vaut environ 4,417 x $10^6$ $(\Omega m)^{-1}$, dans le solénoïde à spires jointives de 173 mm de long, de rayon s valant 15,8963 mm et comportant 1000 spires réalisées avec du fil de 0,15 mm de diamètre.

On a effectué la mesure avec un courant dont la fréquence f est de 100 kHz. La résistance R mesurée a été 909,1 $\Omega$ alors que la résistance à vide $R_v$ est 98 $\Omega$. Le diamètre du tube en acier est 25,6 mm.

Appliquant la relation déduite de (20),

$$\mu_r = \left[\frac{(R - R_v)\, L}{N^2\, \pi\, a}\right]^2 \frac{\sigma}{4\, f\, \mu_o} \tag{27}$$

on obtient

$$\mu_r = 107$$

Dans l'expérience décrite, le facteur ka vaut donc 1932.

Pour des conditions identiques de mesure, le facteur ka est beaucoup plus élevé dans le cas des matériaux ferromagnétiques que dans le cas des matériaux non ferromagnétiques.

On peut donc dans ce cas poser $\dfrac{u}{v} = 1$, $u = \dfrac{\sqrt{2}}{2}$ et $v = \dfrac{\sqrt{2}}{2}$.

Pour déterminer le diamètre $D_b$ ($D_b = 2a$), on a les relations suivantes :

$$D_b = \frac{\sqrt{2}\, kL\,(R - R_v)}{\pi\, \mu\, N^2\, \omega} \quad \text{avec } k = \sqrt{\mu\, \sigma\, \omega} \tag{28}$$

$$D_b = \frac{\sqrt{2}\, kL\,(R - R_v)}{\alpha\, \pi\, \mu\, N^2\, \omega} \quad \text{avec } \alpha = \left[\, 1 - \left(\frac{s\text{-}a}{L}\right)^2\,\right]^{\frac{1}{2}} - \left(\frac{s\text{-}a}{L}\right) \tag{29}$$

$$D_b = \frac{\sqrt{2}}{k}\left\{\mu_r + \sqrt{\mu_r^2 - 2k^2\, s^2\left(\frac{L}{L_v} - 1\right)}\right\} \tag{30}$$

$$D_b = \frac{\sqrt{2}}{k}\left\{\mu_r + \sqrt{\mu_r^2 - 2k^2\, s^2\left(\frac{L}{\alpha\, L_{v\infty}} - 1\right)}\right\} \tag{31}$$

$$D_b = 2s\left(1 - \frac{L}{L_v} + \frac{R - R_v}{\omega\, L_v}\right)^{\frac{1}{2}} \tag{32}$$

$$D_b = 2s\left(1 - \frac{L}{\alpha\, L_{v\infty}} + \frac{R - R_v}{\alpha\, \omega\, L_{v\infty}}\right)^{\frac{1}{2}} \tag{33}$$

Pour réaliser la mesure absolue en utilisant une formule où apparaît la résistance $R_v$ à vide du solénoïde, il est avantageux de maintenir au cours du temps les spires du solénoïde à une température fixe et éventuellement de le faire aussi pour les fils de connection au mesureur d'impédance. Une autre façon est d'alimenter le solénoïde en courant ondulé, c'est-à-dire par le courant résultant de la somme d'un courant continu permettant de déterminer $R_v$ et d'un courant alternatif permettant de déterminer R.

Pour tester ces formules, des expériences non limitatives ont été réalisées avec différents solénoïdes. Tout

13

EP 0 478 601 B1

d'abord, le solénoïde à spires jointives dont nous avons parlé plus haut, a été utilisé. On y a introduit un barreau cylindrique d'aluminium dont la diamètre vaut 25,169 mm. La mesure été réalisée à la fréquence de $10^5$ Hz.

Les résultats obtenus avec les différentes formules, sont présentés au tableau suivant :

| Barreau aluminium Ø 25,169 mm | | |
|---|---|---|
| Diamètre du solénoïde | 31,87 | mm |
| Nombre de spires du solénoïde | 1000 | spires |
| Longueur du solénoïde | 173 | mm |
| Conductivité électrique | 3.3E+07 | $(\Omega m)^{-1}$ |
| Fréquence | 100 | KHz |
| Résistance du solénoïde à vide | 97,47 | $\Omega$ |
| Résistance apparente | 147,1 | $\Omega$ |
| Inductance apparente : L | 2150,7 | $\mu H$ |
| Inductance théorique $L_{v\infty}$ | 5765,35 | $\mu H$ |
| **Résultats en mm** | | |
| Diamètre calculé | | |
| par la formule 28 | 24,98719 | |
| par la formule 29 | 25,47571 | |
| par la formule 30 | 25.55127 | |
| par la formule 31 | 25.40723 | |
| par la formule 33 | 25.40794 | |

En recommençant les calculs et en prenant au lieu de la fréquence réelle de $10^5$ Hz, la fréquence de $10^6$ Hz, on obtient :

| Barreau aluminium Ø 25,169 mm | | |
|---|---|---|
| Diamètre du solénoïde | 31,87 | mm |
| Nombre de spires du solénoïde | 1000 | spires |
| Longueur du solénoïde | 173 | mm |
| Conductivité électrique | 3.3E+07 | $(\Omega m)^{-1}$ |
| Fréquence | **1000** | KHz |
| Résistance du solénoïde à vide | 97,47 | $\Omega$ |
| Résistance apparente | 147,1 | $\Omega$ |
| Inductance apparente : L | 2150,7 | $\mu H$ |
| Inductance théorique : $L_{v\infty}$ | 5765,35 | $\mu H$ |
| **Résultats en mm** | | |
| Diamètre calculé | | |
| par la formule 28 | 7,901644 | |
| par la formule 29 | 8,487934 | |
| par la formule 30 | 25.36048 | |
| par la formule 31 | 25.21193 | |
| par la formule 33 | 25.15086 | |

On observe que les résultats donnés par les formules (28) et (29) sont très sensibles à la justesse de la fréquence tandis que les résultats donnés par les formules (30) et (31), (32) et (33) ne sont quasiment pas influencés par la fréquence.

On en déduit que lorsque $\mu_r = 1$, les formules (30) et (31) ne sont donc que très peu influencées par une variation du paramètre k. On ne doit donc connaître la conductivité $\sigma$ qu'approximativement.

D'autres mesures ont été réalisées lors d'expériences non limitatives avec un solénoïde d'une couche à spires non jointives mais distantes de 1 mm dans le but de diminuer les capacités entre spires et ainsi aug-

14

menter la fréquence de résonance du solénoïde.

Les essais ont porté sur des barreaux cylindriques non ferromagnétiques cuivre et aluminium. (sections circulaires)

Il s'agit respectivement d'aluminium Al Mg Si 0,5 3206 (norme DIN 1712-1725) et de cuivre à 99,9 %. Les conductivités électriques à température ambiante de ces matériaux valent $33 \times 10^6$ $(\Omega m)^{-1}$ pour l'aluminium et $55 \times 10^6$ $(\Omega m)^{-1}$ pour le cuivre.

**Résultats des expériences avec des barreaux en cuivre**

| Fréquence (Hz) | Formule utilisée | | | | | |
|---|---|---|---|---|---|---|
| | 28 | 29 | 30 | 31 | 32 | 33 |
| 10k | 29,045 | 29,178 | 25,128 | 25,026 | 25,233 | 25,146 |
| 20k | 26,671 | 26,887 | 25,124 | 25,025 | 25,153 | 25,063 |
| 40k | 26,294 | 26,521 | 25,118 | 25,021 | 25,134 | 25,043 |
| 100k | 26,506 | 26,727 | 25,106 | 25,012 | 25,118 | 25,027 |
| 200k | 27,454 | 27,644 | 25,096 | 25,002 | 25,110 | 25,019 |
| 400k | 30,597 | 30,667 | 25,060 | 24,966 | 25,084 | 24,992 |
| 1M | 42,712 | 42,091 | 24,783 | 24,681 | 24,832 | 24,732 |
| Valeur mesurée au micromètre : 25,04 mm | | | | | | |

**Résultats des expériences avec des barreaux en aluminium**

| Fréquence (Hz) | Formule utilisée | | | | | |
|---|---|---|---|---|---|---|
| | 28 | 29 | 30 | 31 | 32 | 33 |
| 10k | 39,408 | 39,010 | 25,031 | 24,923 | 25,530 | 25,450 |
| 20k | 34,931 | 34,795 | 25,038 | 24,934 | 25,282 | 25,196 |
| 40k | 32,096 | 32,100 | 25,040 | 24,940 | 25,163 | 25,074 |
| 100k | 30,378 | 30,457 | 25,034 | 24,936 | 25,093 | 25,001 |
| 200k | 30,103 | 30,193 | 25,027 | 24,931 | 25,067 | 24,975 |
| 400k | 31,824 | 31,840 | 24,994 | 24,897 | 25,032 | 24,938 |
| 1M | 40,452 | 39,987 | 24,731 | 24,627 | 24,787 | 24,686 |
| Valeur mesurée au micromètre : 24,99 mm | | | | | | |

On remarque que seule les formules (30), (31), (32) et (33) donnent des résultats assez précis.

On remarque d'une part que dans ce cas-ci, les formules (28) et (29) donnent de mauvais résultats. La raison en est que les spires du solénoïde ne sont pas jointives (écart de 1 mm). Il s'ensuit que les courants de Foucault ne sont pas uniformes sur la barre mais concentrés dans des zones en regard des spires. Comme la puissance dissipée est proportionnelle au carré de la densité de courant, elle est plus importante que dans le cas d'une répartition uniforme des courants de Foucault. Cela explique le désaccord en ce qui concerne les formules (28) et (29).

Le fait que la mauvaise performance des formules (28) et (29) soit attribuable au caractère non jointif du solénoïde utilisé, a été contrôlé dans les essais réalisés avec un solénoïde à spires jointives et dont les résultats ont été présentés plus haut.

D'autres essais ont été réalisés avec les 3 solénoïdes suivants :

| Solénoïde 328 | | |
|---|---|---|
| Nombre de spires | : | 328 espacées de 1 mm |
| Longueur | : | 328,5 mm |
| diamètre du sol | : | 32,1 mm |
| diamètre du fil | : | 0,15 mm |
| Inductance théorique | : | 331,55 µH par (7) |
| Rapport $\dfrac{L}{2a}$ | : | 10,2 |
| α | : | 0,9499 |

| Solénoïde 1060 | | |
|---|---|---|
| Nombre de spires | : | 1060 jointives |
| Longueur | : | 158 mm |
| diamètre du sol | : | 16,17 mm |
| diamètre du fil | : | 0,15 mm |
| Inductance théorique | : | 1853,1 µH par (7) |
| Rapport $\dfrac{L}{2a}$ | : | 9,77 |
| α | : | 0,94752 par (12) |

| Solénoïde 653 | | |
|---|---|---|
| Nombre de spires | : | 653 jointives |
| Longueur | : | 97,7 mm |
| diamètre du sol | : | 2,327 mm |
| diamètre du fil | : | 0,15 mm |
| Inductance théorique | : | 23,321 µH par (7) |
| Rapport $\dfrac{L}{2a}$ | : | 41,98 |
| α | : | 0,988 |

Le tableau çi-dessous présente les résultats des mesures obtenus sur des barreaux cylindriques à sections circulaires en aluminium, leurs diamètres ont été déterminés par pesée.

| Solénoïde 328 | | |
|---|---|---|
| fréquence 100 kHz | | |
| dm | dc | dc-dm |
| mm | mm | $10^{-2}$ mm |
| 25.174 | 25.194 | 1.9341 |
| 25.083 | 25.112 | 2.8498 |
| 24.984 | 25.008 | 2.4122 |
| 24.864 | 24.886 | 2.2719 |
| 24.768 | 24.784 | 1.5843 |
| 24.683 | 24.698 | 1.5665 |

où

dm = diamètre mesuré par pesée

dc = diamètre calculé par la formule 25

dc-dm = l'erreur absolue en $10^{-2}$ mm.

En prenant le barreau 24.984 comme barreau étalon l'erreur systématique vaut 2.4122 centièmes de mm la mesure relative devient:

| dm | dc | erreur relative |
|---|---|---|
| mm | mm | $10^{-2}$ mm |
| 25,174 | 25,194 | -0,4781 |
| 25,083 | 25,112 | 0,4376 |
| 24,984 | 25,008 | 0 |
| 24,864 | 24,886 | -0,1403 |
| 24,768 | 24,784 | -0,8279 |
| 24,683 | 24,698 | -0,8457 |

Il est intéressant d'étudier les termes $x_1$, $y_1$ et $y_2$.

| dm (mm) | $x_1$ | $y_1$ | $y_1$ |
|---|---|---|---|
| 25,174 | 80,56 | 1,98 | 3,02 |
| 25,083 | 81,48 | 1,87 | 3,03 |
| 24,984 | 82,50 | 1,88 | 3,01 |
| 24,864 | 83,71 | 1,84 | 2,99 |
| 24,768 | 84,67 | 1,88 | 2,99 |
| 24,683 | 85,53 | 1,84 | 2,97 |

Le tableau $x_1$ est calculé de façon théorique, $y_1$ est obtenu en faisant la différence entre $\omega L$ et $x_1$. Le terme $y_2$ est donné par l'expérience puisqu'il est égal à $R - R_v$.

On remarque comme prévu, que pour les non ferromagnétiques le flux à travers le barreau est négligeable ($y_1$ et $y_2$ beaucoup plus petits que $x_1$). La différence entre $y_1$ et $y_2$ provient du fait que le solénoïde n'est pas infiniment long comme la théorie le suppose, donc $\omega L - x$ est trop faible, c'est bien ce que l'on observe.

Le tableau suivant donne le résultat des mesures sur des produits longs creux ou à section non circulaire. La mesure exploite la formule (24).

| Solénoïde 328 | | | | |
|---|---|---|---|---|
| fréquence 100 hKz | | | | |
| Matériau | Section | Sm | Sc | (Sc-Sm)/sm |
| | | mm$^2$ | mm$^2$ | x 100 |
| Tuyau aluminium | cercle | 494,02 | 493,418 | 0,121 |
| Tuyau cuivre | cercle | 490,87 | 491,809 | -0,191 |
| Tuyau cuivre | cercle | 284,42 | 285,030 | -0,214 |
| Tuyau cuivre | cercle | 200,30 | 199,623 | 0,337 |
| Barre cuivre | rectangle | 300,00 | 299,424 | 0,192 |
| Barre cuivre | demi-cercle | 156,45 | 153,815 | 1,864 |
| Barre cuivre | hexagone | 124,69 | 120,897 | 3,041 |

L'erreur relative est donnée en %. On observe que les mesures de section par solénoïde sont excellentes. Les deux résultats qui paraissent moins bons sont sans doute influencés par le faible coefficient de remplissage respectivement 19 % et 15 %.

Le tableau suivant représente les résultats des mesures obtenus sur des fils de cuivre électrolytique 99,99 %.

Remarquons que pour les petits diamètres, le terme u/v est plus grand que 1. En effet, à une fréquence de 1 MHz, k = 20838 pour le cuivre et, si a = 0,00075 m (a = rayon du fil de cuivre), alors u/v = 1,0485. Le diamètre dm est mesuré au micromètre.

Le calcul du diamètre dc utilise la formule (25).

| Solénoïde 653 | | | |
|---|---|---|---|
| Fréquence 1 MHz | | | |
| dm | dc | dc-dm | u/v |
| mm | mm | 10$^{-2}$ | |
| 0,9 | 0,8966 | -0,34 | 1,0850 |
| 1,178 | 1,1799 | 0,19 | 1,0635 |
| 1,20 | 1,2027 | 0,27 | 1,0620 |
| 1,35 | 1,3506 | 0,06 | 1,0554 |
| 1,38 | 1,3867 | 0,67 | 1,0531 |
| 1,5 | 1,5065 | 0,65 | 1,0485 |

La précision obtenue par la mesure de section par longs solénoïdes est surprenante surtout que l'écart observé provient sans doute pour une plus grande part de la mesure du diamètre par micromètre que de la mesure par solénoïde.

Ces bonnes performances sont dues à plusieurs raisons :
- Il s'agit de matériau non ferromagnétique.
- Le solénoïde a un support de $\frac{L}{2a}$ de 42, ce qui le rapproche plus de l'hypothèse d'un solénoïde infiniment long. De plus, ce rapport permet de réaliser des mesures valables malgré un coefficient de remplissage minime, 14 % pour le fil de 0,9 mm. Ce rapport élevé permet aussi de faire des mesures valables sans que les fils ne soient centrés.
- Le solénoïde permet de travailler à haute fréquence.

L'expérience suivante a été réalisée avec un jeu de barreaux cylindriques à section circulaire en acier d'une longueur de 500 mm. Ils ont été usinés à dimension et sont de composition identique.

| Solénoïde   328 | | |
| --- | --- | --- |
| fréquence   100   kHz | | |
| d m | dc | dc-dm |
| mm | mm | $10^{-2}$ mm |
| 28 | 29.033 | 103.32 |
| 27,9 | 28.843 | 94.257 |
| 27,8 | 28.632 | 83.243 |
| 27,7 | 28.557 | 85.701 |
| 27,6 | 28.478 | 87.772 |
| 27,5 | 28.513 | 101.31 |
| 27,4 | 28.478 | 107.77 |

Pour les ferromagnétiques le diamètre calculé est plus grand que le diamètre mesuré (dc-dm positif), c'est dû aux pertes par hystérèse. En effet R reprenant les pertes par hystérèse est plus grand que le R prévu par la formule 103 et comme R intervient positivement dans la formule le diamètre calculé (dc) est plus grand que prévu.

L'étude de $x_1$, $y_1$ et $y_2$ confirme cette hypothèse.

| dm (mm) | $x_1$ | $y_1$ | $y_1$ |
| --- | --- | --- | --- |
| 28 | 50,04 | 74,66 | 86,81 |
| 27,9 | 51,17 | 72,90 | 83,97 |
| 27,8 | 52,31 | 71,66 | 81,43 |
| 27,7 | 53,37 | 74,09 | 84,12 |
| 27,6 | 54,56 | 71,90 | 82,15 |
| 27,5 | 55,68 | 70,20 | 81,97 |
| 27,4 | 56,80 | 74,66 | 87,14 |

On observe que $y_2$ est plus grand que $y_1$ ce qui confirme le fait que la puissance fournie par la source produit outre l'échauffement par effet joule, un échauffement par hystérésis. De plus, $y_1$ et $y_2$ sont irréguliers ce qui est dû à une perméabilité différente d'un barreau à l'autre. On remarque que le flux à travers le barreau est plus grand que celui à travers l'entrefer ($x_1 < y_1$). Cela est dû à un coefficient de remplissage élevé et à la haute perméabilité des matériaux ferromagnétiques.

On observe que la précision est beaucoup moins bonne qu'avec les produits longs non ferromagnétiques.

Les expériences suivantes ont été réalisées sur des barres d'acier dur (stubs ± 115 Cr V3, étiré, poli suivant tolérance H7) de 1 m de longueur, à section circulaire.

Le calcul du diamètre $d_o$ utilise la formule (25).

| Solénoïde 1060 | | |
|---|---|---|
| fréquence 100 kHz | | |
| dm | dc | dc-dm |
| mm | mm | $10^{-2}$ mm |
| 13,25 | 13,678 | 42,831 |
| 13,00 | 13,890 | 88,963 |
| 12,75 | 13,725 | 97,477 |
| 12,25 | 13,003 | 72,275 |
| 12,00 | 12,380 | 38,018 |
| 11,75 | 12,374 | 62,358 |
| 11,50 | 12,532 | 103,21 |
| 11,25 | 12,528 | 127,80 |
| 11,00 | 12,014 | 101,36 |
| 10,75 | 11,656 | 90,593 |
| 10,50 | 11,450 | 95,016 |

On observe de nouveau que la précision obtenue est beaucoup plus faible dans le cas des matériaux ferromagnétiques que dans le cas des matériaux non ferromagnétiques.

On peut faire les mêmes remarques que précédemment sur $x$, $y_1$ et $y_2$.

| dm (mm) | $x_1$ | $y_1$ | $y_1$ |
|---|---|---|---|
| 13,25 | 378,84 | 645,63 | 668,60 |
| 13,00 | 407,78 | 601,04 | 644,60 |
| 12,75 | 436,17 | 661,94 | 718,09 |
| 12,25 | 491,30 | 553,16 | 537,70 |
| 12,00 | 518,03 | 564,31 | 592,55 |
| 11,75 | 544,22 | 506,71 | 512,32 |
| 11,50 | 569,85 | 577,46 | 623,2 |
| 11,25 | 594,93 | 541,32 | 621,00 |
| 11,00 | 619,46 | 492,85 | 528,50 |
| 10,75 | 643,44 | 490,61 | 474,40 |
| 10,50 | 666,87 | 461,91 | 482,70 |

L'expérience suivante porte sur des fils d'acier "stubs" d'un diamètre de l'ordre du mm, d'une longueur de 1m et de section circulaire. Le coefficient u/v n'est pas calculable car la perméabilité des tiges est inconnue. Prenons à titre d'exemple une perméabilité relative de 100 et une conductivité électrique de 4,6 $10^6$ $(\Omega m)^{-1}$ pour un diamètre de 1 mm, à une fréquence de 1 MHz le facteur u/v vaut alors 1,024. Dans les résultats qui suivent u/v est posé égal à 1. Cette hypothèse ne limite en rien l'applicabilité industrielle du procédé car l'important n'est pas l'absence d'erreur systématique, mais bien la fidélité des mesures.

| Solénoïde 653 | | |
|---|---|---|
| fréquence 1 kHz | | |
| d m | dc | dc-dm |
| mm | mm | $10^{-2}$ mm |
| 1,00 | 0,9834 | -1,6259 |
| 1,10 | 1,1466 | 4,664 |
| 1,19 | 1,2217 | 3,1742 |
| 1,30 | 1,2011 | -9,8866 |
| 1,39 | 1,4405 | 5,0475 |
| 1,50 | 1,3815 | -1,1845 |
| 1,60 | 1,6468 | 4,6816 |
| 1,70 | 1,5843 | -1,1570 |
| 1,80 | 1,8674 | 6,7359 |

On peut faire les mêmes remarques que précédemment sur $x$, $y_1$ et $y_2$.

| dm (mm) | $x_1$ | $y_1$ | $y_1$ |
|---|---|---|---|
| 1,00 | 120,34 | 120,91 | 120,86 |
| 1,10 | 114,65 | 112,16 | 115,68 |
| 1,19 | 109,07 | 111,60 | 114,28 |
| 1,30 | 101,66 | 134,32 | 128,26 |
| 1,39 | 95,10 | 165,02 | 169,30 |
| 1,50 | 86,50 | 119,91 | 111,14 |
| 1,60 | 78,11 | 143,14 | 147,51 |
| 1,70 | 69,18 | 138,49 | 128,51 |
| 1,80 | 59,71 | 163,00 | 169,81 |

Pour améliorer le résultat de la mesure de section dans le cas des produits longs non ferromagnétiques, on a imaginé de les aimanter fortement de manière uniforme et continue pendant la mesure, car alors leur perméabilité relative $\mu_r$ tend vers l'unité et ainsi le comportement des matériaux ferromagnétiques se rapprochent du comportement des matériaux ferromagnétiques.

Les barreaux "stubs" furent magnétisés dans une bobine de 800 spires parcourue par un courant constant de 18A.

longueur : 36 cm

nombre de couches : 5

nombre de spires/couches : 160

diamètre interne : 6,3 cm

diamètres externe : 9 cm

champ $\vec{H}$, I = 18A : 39960 A/m (au centre de la bobine)

Les résultats des mesures sont présentés au tableau suivant.

| Solénoïde 1060 | | |
|---|---|---|
| fréquence 100 kHz | | |
| d m | dc | dc-dm |
| mm | mm | $10^{-2}$ mm |
| 13,25 | 13,230 | 1,9801 |
| 13,00 | 13,020 | -1,9519 |
| 12,75 | 12,736 | 1,3904 |
| 12,25 | 12,238 | 1,1749 |
| 12,00 | 12,008 | -0,8136 |
| 11,75 | 11,733 | 1,7469 |
| 11,50 | 11,514 | -1,3913 |
| 11,25 | 11,269 | -1,8828 |
| 11,00 | 11,006 | -0,6250 |
| 10,75 | 10,731 | 1,8919 |
| 10,50 | 10,525 | -2,5421 |

On observe une amélioration considérable du résultat de la mesure.

La cause de l'amélioration est que le comportement du matériau ferromagnétique sous forte magnétisation se rapproche du comportement des non ferromagnétiques ainsi que l'indique l'inversion des valeurs de $x_1$ vis-à-vis de $y_1$ et $y_2$.

| dm (mm) | $x_1$ | $y_1$ | $y_2$ |
|---|---|---|---|
| 13,25 | 378,84 | 138,20 | 139,45 |
| 13,00 | 407,78 | 137,16 | 143,46 |
| 12,75 | 436,17 | 138,55 | 141,77 |
| 12,25 | 491,30 | 120,62 | 125,52 |
| 12,00 | 518,03 | 119,08 | 126,80 |
| 11,75 | 544,22 | 112,19 | 118,10 |
| 11,50 | 569,85 | 110,87 | 120,72 |
| 11,25 | 594,93 | 114,00 | 125,14 |
| 11,00 | 619,46 | 105,18 | 115,98 |
| 10,75 | 643,44 | 100,99 | 110,40 |
| 10,50 | 666,87 | 96,287 | 110,62 |

Les expériences avec les fils d'1 mm (acier Stub) sans aimantation, sont présentés ci-dessous. La bobine utilisée pour la magnétisation des tiges d'acier de petit diamètre, a des dimensions un peu particulières car elle a été prise dans le lot de bobines existant.

longueur : 9 cm

nombre de couches : 30

nombre de spires/couches : 55

diamètre interne : 1,5 cm

diamètres externe : 12,4 cm

champ $\vec{H}$, I = 7A : 126210 A/m (au centre de la bobine)

Le champ magnétisant que peut produire cette bobine est énorme.

| Solénoïde 653 | | | | | |
|---|---|---|---|---|---|
| Fréquence 1 MHz | | | | | |
| dm | dc | dc-dm | x1 | y1 | y2 |
| mm | mm | $10^{-2}$ mm | | | |
| 1,00 | 0,9958 | -0,4121 | 120,34 | 12,14 | 12,82 |
| 1,10 | 1,0518 | -4,8207 | 114,65 | 18,36 | 16,39 |
| 1,19 | 1,1708 | -1,9155 | 109,07 | 18,03 | 17,52 |
| 1,30 | 1,2944 | -0,5646 | 101,66 | 18,11 | 18,29 |
| 1,39 | 1,3965 | 0,5212 | 95,10 | 17,37 | 18,35 |
| 1,50 | 1,4887 | -1,1296 | 86,50 | 21,52 | 21,02 |
| 1,60 | 1,5765 | -2,3487 | 78,11 | 25,50 | 23,81 |
| 1,70 | 1,7060 | 0,5961 | 69,18 | 23,51 | 24,29 |

On observe de nouveau une amélioration considérable du résultat de la mesure.

On peut faire les mêmes observations que plus haut sur les valeurs relatives de $x_1$ d'une part et de $y_1$ et $y_2$ d'autre part.

Un problème se pose cependant avec l'utilisation d'une bobine d'aimantation. Lorsque le solénoïde de mesure se trouve dans la bobine d'aimantation, son impédance change.

Les tableaux suivants donnent les différentes valeurs de $L_v$ (impédance à vide) et $R_v$ (résistance à vide) pour différentes fréquences et différentes situations :

D = le solénoïde se trouve en dehors de la bobine, c'est-à-dire qu'il ne subit l'influence d'aucun objet.

O = le solénoïde se trouve dans la bobine d'aimantation mais celle-ci est en circuit ouvert.

F = le solénoïde se trouve dans la bobine d'aimantation et celle-ci est court circuitée.

| Solénoïde 328 | | | | | | |
|---|---|---|---|---|---|---|
| fréquence | $L_v \, \mu H$ | | | $R_v \, \Omega$ | | |
| KHz | D | O | F | D | O | F |
| 1000 | 555,2 | 393,55 | 393,73 | 136,9 | 88,9 | 90,9 |
| 400 | 346,52 | 280,25 | 280,75 | 37,75 | 44,69 | 44,82 |
| 200 | 328,85 | 268,98 | 270,18 | 33,01 | 34,88 | 34,99 |
| 100 | 324,75 | 259,07 | 267,84 | 32,1 | 33,6 | 33,22 |
| 40 | 232,58 | -21,90 | 270,08 | 31,91 | 61,54 | 32,419 |
| 20 | 323,34 | 344,92 | 270,66 | 31,85 | 32,017 | 32,207 |
| 10 | 323,42 | 327,18 | 272,61 | 31,837 | 31,856 | 32,044 |

Le solénoïde se trouve 328 se trouve dans la bobine d'aimantation de 800 spires.

Lorsque le solénoïde d'aimantation est alimenté par une source de courant par exemple une batterie, l'inductance $L_v$ et la résistance $R_v$ du solénoïde de mesure sont pratiquement les mêmes que lorsque l'on court circuite les extrémités du solénoïde d'aimantation.

| Solénoïde 1060 | | | | | | |
|---|---|---|---|---|---|---|
| fréquence | $L_v \, \mu \, H$ | | | $R_v \, \Omega$ | | |
| KHz | D | O | F | D | O | F |
| 400 | 2,6634 | 2,4932 | 2,4798 | 248,1 | 250,8 | 250,1 |
| 200 | 1,9213 | 1,7512 | 1,7748 | 92 | 137 | 109,7 |
| 100 | 1,7954 | 1,7383 | 1,7592 | 75,9 | 78,8 | 79,2 |
| 40 | 1,7626 | 1,4423 | 1,7179 | 72,57 | 99,73 | 73,37 |
| 20 | 1,7575 | 1,7769 | 1,7135 | 72,19 | 72,514 | 72,59 |
| 10 | 1,7561 | 1,7593 | 1,7140 | 72,02 | 72,085 | 72,18 |

Le solénoïde 1060 se trouve dans la bobine de 800 spires.

| Solénoïde 653 | | | | | | |
|---|---|---|---|---|---|---|
| fréquence | $L_v \, \mu \, H$ | | | $R_v \, \Omega$ | | |
| KHz | D | O | F | D | O | F |
| 4000 | 39,294 | 67,605 | 37,615 | 64,01 | 57,59 | 57,41 |
| 2000 | 25,314 | 24,910 | 24,910 | 16,20 | 16,28 | 16,29 |
| 1000 | 23,440 | 23,169 | 23,169 | 9,62 | 9,89 | 9,9 |
| 400 | 23,030 | 22,854 | 22,853 | 7,366 | 7,471 | 7,477 |
| 200 | 23,007 | 22,856 | 22,847 | 6,988 | 7,035 | 7,045 |
| 100 | 23,022 | 22,818 | 22,181 | 6,865 | 6,892 | 9,897 |
| 40 | 23,016 | 23,046 | 23,232 | 6,8172 | 6,8692 | 6,8785 |
| 20 | 23,024 | 23,137 | 23,028 | 6,8011 | 6,8350 | 6,8284 |
| 10 | 23,041 | 23,065 | 23,021 | 6,7973 | 9,8202 | 6,8537 |

Le solénoïde 653 se trouve dans la bobine d'aimantation à 30 couches.

On remarque que l'effet perturbateur du solénoïde d'aimantation est le plus important pour le solénoïde 328, moins important pour le solénoïde 653 et faible pour le solénoïde 653.

Les coefficients de remplissage sont de :

pour le solénoïde 328 :
$$\frac{(32,1)^2}{(63)^2} = 26 \, \%$$

pour le solénoïde 1060 :
$$\frac{(16,17)^2}{(63)^2} = 6,5 \, \%$$

pour le solénoïde 653 :
$$\frac{(2,33)^2}{(15)^2} = 2,4 \, \%$$

Le fait que des deux derniers solénoïdes ne subissent qu'une faible influence de la bobine d'aimantation provient de leur faible coefficient de remplissage. On trouve ici une seconde contrainte sur la géométrie de la bobine d'aimantation : il faut que le diamètre de la bobine soit beaucoup plus grand que celui du solénoïde de mesure pour pouvoir négliger l'effet de la bobine sur les résultats de la mesure. Ceci est dû au fait que pour un faible coefficient de remplissage solénoïde-bobine, le flux qui traverse les spires de la bobine est petit et donc les courants induits seront faibles, par conséquence l'influence de la bobine d'aimantation peut être négligée.

Une façon d'éliminer l'effet perturbateur sur la mesure du solénoïde d'aimantation, est de réaliser un blindage du solénoïde de mesure par une couche de matériau non ferromagnétique.

En conclusion, ces résultats expérimentaux permettent de démontrer la validité des formules que l'on a établies ci-dessus pour la mesure absolue du diamètre de barreaux cylindriques en matériaux conducteurs à l'aide des courants de Foucault.

En effet, en appliquant la formule (26), dans laquelle le coefficient $\alpha$ corrige la légère déviation des résultats due aux effets de bords, on obtient une excellente cohésion entre les valeurs calculées et mesurées du diamètre de barreaux de matériaux ferromagnétiques (par exemple acier) et non-ferromagnétiques (par exem-

ple cuivre). Dans le cas des matériaux ferromagnétiques, il est cependant nécessaire d'aimanter fortement le produit long pendant la mesure dans un champ uniforme. L'expérience a montré que la bobine d'aimantation idéale doit être nettement plus longue que le solénoïde de mesure et que de surcroît, il est souhaitable que son diamètre soit également nettement plus grand que le diamètre du solénoïde de mesure. La seconde exigence permet d'éviter les effets d'induction mutuelle (effet transformateur) qui rendent les formules présentées moins applicables.

Un dernier point à souligner est le degré de reproductibilité inattendu des mesures de section par solénoïde.

Le tableau suivant le met en évidence. Les expériences présentées ont été répétées dans les mêmes conditions expérimentales, à 18 jours d'intervalle.

| | | | | D calculé (mm) | | Ecart |
|---|---|---|---|---|---|---|
| Produit | Section | Bobine | Dmesuré (mm) | le 4/5/90 | le 22/5/90 | $10^{-6}$ m |
| Cu | rond | 328 | 25,025 | 24,948 | 24,950 | 2 |
| Al | rond | 328 | 25,165 | 25,102 | 25,100 | -2 |
| Cu | tuyau | 328 | 25 | 24,938 | 24,940 | 2 |
| Cu | rond | 1060 | 12 | 11,9975 | 12,002 | 4,5 |
| idem en mouvement manuel rapide | | | | 12,008 | 12,006 | -2 |
| Cu | rond | 653 | 0,9 | 0,8973 | 0,8927 | -4,6 |
| Cu | rond | 653 | 1,20 | 1,20328 | 1,1995 | -3,8 |
| Acier | rond | 653 | 1 | 0,9922 | 0,9899 | -3,3 |
| Acier | rond | 653 | 1,1 | 1,052 | 1,050 | -2 |
| Acier | rond | 1060 | 13,25 | 13,2207 | 13,225 | 4 |

On constate de manière surprenante que la reproductibilité dans le temps est de l'ordre de 2 à 5 microns alors qu'aucune précaution spéciale n'a été prise pour assurer cette haute reproductibilité. Les mesures ont été réalisées dans une salle de réunion non thermostasisée ! Cette reproductibilité est supérieure à ce qu'en pratique industrielle on peut obtenir avec des équipements bien plus sophistiqués, certains procédés à lasers par exemple.

La mesure du diamètre peut donc se faire de manière absolue par l'une de formules décrites selon l'invention.

Ces formules sont écrites en supposant que le paramètre ka est suffisamment élevé pour que l'on puisse écrire :

$$u = v = \frac{\sqrt{2}}{2}$$

En fait, il peut être utile dans certains cas ou le paramètre ka n'est pas suffisamment élevé d'exploiter les formules sans autre approximation que celle liée à la détermination du coefficient correcteur $\alpha$.

Lorsqu'on connaît la différence de résistance $R - R_v$ on peut calculer le diamètre $D_b$ de la bare cylindrique encerclée par la formule

$$D_b = \frac{kL(R - R_v)}{\alpha\, v\, \pi\, \mu_o\, \mu_r\, N^2\, \omega} \quad (34)$$

Lorsqu'on connaît l'inductance **L**, on peut calculer le diamètre $D_b$ par la formule :

$$D_b = \frac{2u}{k}\left[\mu_r + \sqrt{\mu_r^2 - \frac{k^2 S_s}{\pi u^2}\left(\frac{L\,L}{\alpha\, \mu_o\, N^2\, S_s} - 1\right)}\,\right] \quad (35)$$

Lorsqu'on connaît la différence de résistance $R - R_v$ et l'inductance **L**, on peut calculer la section $S_b$ et le diamètre $D_b$ par les formules :

$$S_b = S_s - \frac{L}{\alpha\, \mu_o\, N^2} L + \frac{u}{v}\frac{L}{\alpha\, \mu_o\, N^2}(R - R_v)$$

$$D_b = D_s\sqrt{1 - \frac{L}{\alpha\, \mu_o\, N^2\, S_s} L + \frac{u}{v}\frac{L}{\alpha\, \mu_o\, N^2\, S_s}(R - R_v)} \quad (36)$$

Lors de l'utilisation de ces formules les valeurs de u, v et u/v sont trouvées dans des tables mathématiques.

Il est aussi possible de réaliser la mesure par comparaison. Une première méthode avantageusement consiste à introduire un barreau de référence dans le solénoïde et de noter l'impédance du solénoïde et de remplacer le barreau de référence par le barreau sur lequel doit porter la mesure.

La variation d'impédance si le barreau de référence est réalisé dans la même matière et avec la même géométrie que le barreau à mesurer, est fonction de la différence de section ou de diamètre.

Après étalonnage, la différence d'impédance pourra être utilisée pour déterminer le diamètre.

On peut donc utiliser pour exploiter la mesure une procédure empirique. Toutefois, on peut aussi exploiter le résultat de la mesure, par une procédure logique exploitant des relations déduites des relations (17), (24), (28), (29), (30), (31), (32) et (33).

Si la section ou le diamètre de la barre cylindrique à mesurer n'est pas trop différente de la section ou du diamètre de la barre cylindrique étalon, on peut trouver par différentiation, la relation pour exploiter la mesure.

La différentiation de la relation (17) donne

$$\Delta S_b = - S_s \frac{\Delta L}{\alpha\, L_{v\infty}} \quad (37)$$

La différentiation totale de la relation (24) donne après simplification :

$$\Delta S_b = \frac{L}{\alpha\, \mu_o\, N^2} \left( \frac{u}{v}\, \frac{\Delta R}{\omega} - \Delta L \right) \tag{38}$$

La différentiation de la relation (30) donne

$$\Delta D_b = \frac{\sqrt{2}\ kL}{\alpha\, \pi\, \mu\, N^2\, \omega} \quad (39)$$

La différentiation totale du carré de la relation (33) donne

$$\Delta D_b^2 = \frac{4\, L}{\alpha\, \pi\, \mu_o\, N^2} \left( \frac{\Delta R}{\omega} - \Delta L \right) \tag{40}$$

Pour réaliser la mesure par comparaison avec un seul solénoïde et un barreau étalon, il est avantageux de maintenir au cours du temps, les spires du solénoïde à une température fixe et éventuellement de le faire aussi pour les fils de connection.

Une autre réalisation intéressante de l'invention est de mesurer la température des spires du solénoïde et des fils de connection et de réaliser par calcul la correction de résistance $R_v$ pour tenir compte des variations de température des spires du solénoïde et des fils de connection ainsi que les autres effets de la variation de température du solénoïde.

Dans les formules, il est avantageux de ramener la valeur de $R_v$ à la valeur qui aurait été mesurée à la température de référence.

La formule (40) suppose que la résistance à vide $R_v$ du solénoïde reste constante, la valeur $\Delta R$ étant alors causée uniquement par la variation de section de la barre. Ceci implique la thermostatisation du solénoïde si les écarts de résistance dus à la température ne permettait pas d'atteindre la précision escomptée.

On peut se passer de thermostatisation si l'on réalise les mesures de résistance et d'impédance avec du courant ondulé c'est-à-dire la somme d'un courant continu et d'un courant alternatif. On peut ainsi concomittement déterminer les valeurs de $R_v$, R et L dont l'exploitation permet de déterminer la valeur de la section du produit cylindrique conducteur. On peut également se passer de la thermostatisation si l'on mesure la température du solénoïde et que l'on corrige l'effet sur la mesure dû à la différence de température du solénoïde de mesure.

Une autre manière de réaliser la mesure par comparaison, est de réaliser un montage en pont, ou une des branches du pont est occupée par le solénoïde de mesure, une autre branche du pont et avantageusement la branche opposée, présentent une impédance réglable. Le réglage initial est avantageusement réalisé de façon à annuler la tension électrique aux extrémités de la diagonale du pont qui est opposée à la diagonale aux extrémités de laquelle se fait l'alimentation.

La tension qui apparaît aux extrémités de la diagonale autres que les extrémités d'alimentation et/ou la phase vis-à-vis du courant et cive-versa est alors avantageusement une mesure de la variation de section.

D'autres types de montage en pont sont envisageables et peuvent avantageusement être utilisés.

Un montage en pont particulièrement intéressant est celui où le solénoïde encerclant le produit cylindrique conducteur occupe une branche du pont et où celui-ci est alimenté en courant ondulé. On peut ainsi distinguer dans la variation de résistance $\Delta R$, la part qui est due au courant alternatif d'une part et la part qui est due au changement de température du solénoïde et ainsi on s'affranchit de la nécessité d'une thermostatisation. Cette dernière sera cependant encore utile pour éliminer les variations dimensionnelles du solénoïde qui peuvent entraîner une imprécision significative.

On peut même envisager avantageusement d'utiliser la fréquence de résonance du solénoïde pour déterminer la section ou le diamètre du produit encerclé (fig. 4 à 7).

Une façon avantageuse de réaliser une méthode de mesure exploitant la fréquence de résonance est d'insérer le solénoïde encerclant le produit cylindrique conducteur dans un circuit résonant et d'exploiter la variation de fréquence de résonance du circuit avec la section ou le diamètre du produit pour faire la mesure de section ou de diamètre. Cette méthode offre l'avantage d'être très sensible et de travailler à des fréquences où il n'est plus possible d'exploiter les inductances **L** et les résistances R mesurées par les formules proposées.

Le procédé selon l'invention, utilise des longs solénoïdes dans l'entrefer desquels l'induction est suffisamment uniforme.

Le concept de long solénoïde de mesure implique que la longueur du solénoïde soit plus grande que plusieurs fois son diamètre. Cependant, le critère de longueur nécessaire du solénoïde de mesure pour réaliser une mesure précise dépend également de l'entrefer du solénoïde de mesure. Un des buts à atteindre est que dans l'entrefer, les lignes d'induction soient le plus possible parallèles à l'axe du solénoïde de mesure. Or il semble que le fait de remplir le solénoïde avec un barreau conducteur ait pour effet secondaire de redresser les lignes d'induction dans le solénoïde s'il est alimenté en courant alternatif ou ondulé. Cet effet semble d'autant plus marqué que l'entrefer est faible.

Il est avantageux pour l'application industrielle du procédé de réaliser un blindage électromagnétique du solénoïde de mesure. Ce blindage peut concerner soit le solénoïde de mesure seul soit le solénoïde de mesure et le solénoïde d'aimantation. Dans le cas ou ce blindage concerne le solénoïde de mesure seul, il est avantageux que le remplissage de la section du volume affecté par le blindage, par le solénoïde de mesure soit petit. De plus, il est avantageux que le centre géométrique du solénoïde de mesure soit proche du centre géométrique de la surface externe du volume affecté par le blindage.

Pour l'application du procédé dans le cas de produits longs conducteurs avec un revêtement conducteur, il est avantageux que le long solénoïde de mesure soit alimenté par un courant alternatif ou ondulé d'une fréquence suffisamment élevée pour que l'impédance du solénoïde ne soit influencée que par la couche de produit de revêtement conducteur de l'électricité ou du moins que ce soit là, la cause d'influence prépondérante.

On peut aussi envisager d'exploiter le procédé de mesure en multifréquence c'est-à-dire que le courant d'alimentation du solénoïde de mesure soit un courant multifréquence pouvant éventuellement aussi comporter une composante continue. L'exploitation du résultat de mesure peut alors se faire par fréquence ou par bande de fréquences.

A titre d'exemple non limitatif, on pourra alors déterminer les composantes de l'impédance pour chaque fréquence et chaque bande de fréquence. Dans le cas des matériaux conducteurs revêtus d'une ou de plusieurs couches de revêtements conducteurs, on pourra dans le système multifréquence déterminer le rayon de chaque surface cylindrique d'interface entre des milieux différents pour autant que l'un de ces milieux soit conducteur.

Pour appliquer le procédé de mesure, au lieu d'employer un seul solénoïde de mesure qui sert concomittemment à l'excitation et à la réception, on peut découper l'excitation de la réception et utiliser un solénoïde de réception intérieur à un long solénoïde d'excitation.

Il n'est pas indispensable que le solénoïde de réception soit long pour obtenir une mesure de précision.

De même que plus haut pour le blindage, il est avantageux que le solénoïde d'excitation ait un diamètre nettement plus grand que le solénoïde de réception.

Dans le cas des mesures sur des barreaux ferromagnétiques, on peut imaginer pour améliorer la mesure, imposer un mouvement vibratoire au solénoïde d'aimantation et exploiter la moyenne des signaux électriques obtenus aux bornes du solénoïde de mesure.

Pour augmenter la précision lors de la mesure de section de produits longs ferromagnétiques, on peut aussi avantageusement mettre en rotation continue, discontinue ou alternative, le solénoïde d'aimantation tout en superposant éventuellement un mouvement vibratoire.

**Revendications**

1. Procédé de mesure de la section ou du diamètre de produits cylindriques en matériau conducteur en utilisant un solénoïde de mesure encerclant le produit cylindrique conducteur, en exploitant au moins un paramètre lié à la tension et/ou au courant alimentant le solénoïde et en déduisant la valeur de la section ou du diamètre dudit produit conducteur d'après la ou les valeurs du ou des paramètres caractérisé en ce que la longueur du solénoïde de mesure est proche ou supérieure à dix fois son diamètre interne.

2. Procédé selon la revendication 1 caractérisé en ce que le courant parcourant le solénoïde de mesure est un courant ondulé ou alternatif.

3. Procédé selon la revendication 1 ou 2 caractérisé en ce qu'on travaille avec deux solénoïdes découplés, l'un exerçant une fonction d'excitation, l'autre une fonction de réception, le solénoïde d'excitation jouant le rôle de solénoïde de mesure.

4. Procédé selon la revendication 3 caractérisé en ce que l'on utilise un solénoïde de réception intérieur à un long solénoïde d'excitation, le solénoïde de réception n'étant pas nécessairement long.

5. Procédé selon l'une quelconque des revendications précédentes caractérisé en ce qu'on travaille par comparaison en introduisant le solénoïde dans un montage en pont, l'autre branche étant à impédance réglable.

6. Procédé selon l'une quelconque des revendications précédentes caractérisé en ce qu'on exploite pour déterminer la section ou le diamètre du produit conducteur la fréquence de résonnance du circuit.

7. Procédé selon l'une quelconque des revendications précédentes caractérisé en ce qu'on travaille à multifréquences.

8. Dispositif pour la mise en oeuvre du procédé selon la revendication 1 caractérisé en ce qu'il comprend au moins un mesureur d'impédance et un solénoïde dont la longueur est proche ou supérieure à dix fois son diamètre.

9. Dispositif pour la mise en oeuvre du procédé selon la revendication 1 caractérisé en ce qu'il comprend au moins un solénoïde dont la longueur est proche ou supérieure à dix fois le diamètre, introduit dans une branche d'un pont de mesure d'impédance.

10. Dispositif pour la mise en oeuvre du procédé selon la revendication 1 caractérisé en ce qu'il comprend au moins un solénoïde dont la longueur est proche ou supérieure à dix fois le diamètre inséré comme élément dans un circuit électrique équipé d'un système de mesure de la fréquence de résonance du circuit.

**Patentansprüche**

1. Verfahren zum Messen des Querschnitts oder des Durchmessers von zylindrischen Produkten aus leitendem Material unter Verwendung eines Meßsolenoids, das das leitende zylindrische Produkt umschließt, wobei mindestens ein mit der Versorgungsspannung und/oder dem Strom des Solenoids verknüpfter Parameter benutzt wird, und der Wert des Querschnitts oder des Durchmessers dieses leitenden Produkts aus dem oder den Werten des oder der Parameter abgeleitet wird, dadurch gekennzeichnet, daß die Länge des Meßsolenoids nahe bei, oder über seinem zehnfachen inneren Durchmesser liegt.

2. Verfahren gemäß Anspruch 1, dadurch gekennzeichnet, daß der durch das Meßsolenoid fließende Strom ein Wellenstrom oder ein Wechselstrom ist.

3. Verfahren gemäß Anspruch 1 oder 2, dadurch gekennzeichnet, daß zwei entkoppelte Solenoide verwendet werden, wobei das eine eine Erregungsfunktion, und das andere eine Empfangsfunktion ausübt, und das Erregungssolenoid die Funktion des Meßsolenoids erfüllt.

4. Verfahren gemäß Anspruch 3, dadurch gekennzeichnet, daß ein Empfangssolenoid innerhalb eines langen Erregungssolenoids verwendet wird, wobei das Empfangssolenoid nicht notwendigerweise lang ist.

5. Verfahren gemäß irgendeinem der vorhergehenden Ansprüche, dadurch gekennzeichnet, daß ein Vergleich gemacht wird, wozu das Solenoid in einer Brückenschaltung angeordnet wird, deren anderer Zweig eine einstellbare Impedanz aufweist.

6. Verfahren gemäß irgendeinem der vorhergehenden Ansprüche, dadurch gekennzeichnet, daß zur Bestimmung des Querschnitts oder des Durchmessers des leitenden Produkts die Resonanzfrequenz des Kreises benutzt wird.

7. Verfahren gemäß irgendeinem der vorhergehenden Ansprüche, dadurch gekennzeichnet, daß eine Multifrequenzmessung gemacht wird.

8. Vorrichtung zur Verwirklichung des Verfahrens gemäß Anspruch 1, dadurch gekennzeichnet, daß sie mindestens ein Impedanzmeßgerät und ein Solenoid aufweist, wobei die Länge dieses Solenoids nahe bei, oder über der zehnfachen Länge seines Durchmessers liegt.

9. Vorrichtung zur Verwirklichung des Verfahrens gemäß Anspruch 1, dadurch gekennzeichnet, daß sie mindestens ein Solenoid aufweist, dessen Länge nahe bei, oder über dem zehnfachen Durchmesser liegt, und das in einem Zweig einer Impedanzmeßbrücke angeordnet ist.

10. Vorrichtung zur Verwirklichung des Verfahrens gemäß Anspruch 1, dadurch gekennzeichnet, daß sie mindestens ein Solenoid aufweist, dessen Länge nahe bei, oder über dem zehnfachen Durchmesser liegt, und das als Bauteil in einen elektrischen Kreis eingefügt ist, der mit einem System zur Messung der Resonanzfrequenz des Kreises ausgerüstet ist.

## Claims

1. Measurement method for measuring the cross-section or diameter of electroconductive cylindrical products comprising the steps of using a measuring solenoid encompassing the conductive cylindrical product, employing at least one parameter bound to the potential and/or the current feeding the solenoid and deducting the value of the cross-section or diameter of said conductive product according to the value(s) of said parameter(s), characterized by the fact that the length of the measuring solenoid is near or higher than ten times its internal diameter.

2. Method according to claim 1, characterized by the fact that the current going through the measuring solenoid is a wavy or alternating current.

3. Method according to claim 1 or 2, characterized by the fact that two uncoupled solenoids are used, one with an activation function, the other with a reception function, said activation solenoid playing the role of measuring solenoid.

4. Method according to claim 3, characterized by the fact that a reception solenoid is used inside a long activation solenoid, said activation solenoid being not necessarily long.

5. Method according to any of preceding claims, characterized by the fact that it is carried out by comparison by introducing the solenoid into a bridge circuit, the other branch being with controllable impedance.

6. Method according to any of preceding claims, characterized by the fact that the resonance frequency of the circuit is used to define the cross-section or diameter of the conductive product.

7. method according to any of preceding claims, characterized by the fact that multifrequencies are used.

8. Device to carry out the method according to claim 1, characterized by the fact that it comprises at least one impedance measuring apparatus and one solenoid the length of which is near or higher than ten times its diameter.

9. Device to carry out the method according to claim 1, characterized by the fact that it comprises at least one solenoid the length of which is near or higher than ten times the diameter, inserted into a branch of an impedance measuring bridge.

10. Device to carry out the method according to claim 1, characterized by the fact that it comprises at least one solenoid the length of which is near or higher than ten times the diameter, inserted as an element into an electrical circuit provided with a frequency resonance measuring system for the circuit.

Fig. 1

Fig . 2

Fig . 3

Fig . 4

Fig . 5

Fig.6

Fig.7